# FASCICULE DE BREVET EUROPEEN

(11) **EP 0 824 812 B1**
(45) Date de publication et mention de la délivrance du brevet: **04.08.2004**
(21) Numéro de dépôt: 96914268.6
(22) Date de dépôt: 30.04.1996
(51) Int. Cl.: H04L 5/06, H04L 27/00

(54) **SIGNAL NUMERIQUE MULTIPORTEUSE ET METHODES DE TRANSMISSION ET RECEPTION D'UN TEL SIGNAL**
DIGITALES MEHRTRÄGERSIGNAL UND VERFAHREN ZUM SENDEN UND EMPFANGEN EINES SOLCHEN SIGNALS
DIGITAL MULTICARRIER SIGNAL AND TRANSMISSION AND RECEPTION METHODS THEREFOR

(30) Priorité: 02.05.1995 FR 9505455
(43) Date de publication de la demande: 25.02.1998
(73) Titulaire: FRANCE TELECOM, 75015 Paris (FR); TELEDIFFUSION DE FRANCE S.A., 75732 Paris Cedex 15 (FR); Société Civile Michel Alard, 75004 Paris (FR)
(72) Inventeur: ALARD, Michel, F-75004 Paris (FR)
(74) Mandataire: Vidon, Patrice
(86) Numéro de dépôt international: PCT/FR1996/000661
(87) Numéro de publication internationale: WO 1996/035278

(56) Documents cités:
- EP-A- 0 441 732
- IEEE TRANSACTIONS ON INFORMATION THEORY, vol. 38, no. 2, Mars 1992, NEW YORK, US, pages 785-800, XP000257725 WORNELL & OPPENHEIMER: "Wavelet-based representations for a class of self-similar signals with application to fractal modulation"
- IEEE TRANSACTIONS ON INFORMATION THEORY, vol. 36, no. 5, Septembre 1990, NEW YORK, US, pages 961-1005, XP000141837 DAUBECHIES: "The Wavelet transform, time-frequency localization and signal analysis" cité dans la demande
- PROCEEDINGS OF THE INTERNATIONAL CONFERENCE ON COMMUNICATIONS, NEW ORLEANS, US, 1994, 1 - 5 Mai 1994, NEW YORK, US, pages 311-315, XP000438931 TZANNES ET AL.: "DMT systems, DWMT systems and digital filter banks"
- 1961 IRE INTERNATIONAL CONVENTION RECORD, pages 126-133, XP002011938 FRANCO & LACHS: "An orthogonal coding technique for communications" cité dans la demande
- PROCEEDINGS OF THE GLOBAL TELECOMMUNICATIONS CONFERENCE (GLOBECOM), SAN FRANCISCO, NOV. 28 - DEC. 2, 1994, vol. 1, IEEE, pages 363-367, XP000488574 GANDHI ET AL.: "WAVELETS FOR BASEBAND CODING OF WAVEFORMS"
- THE BELL SYSTEM TECHNICAL JOURNAL, vol. 45, Décembre 1966, pages 1775-1796, XP000573231 CHANG: "Synthesis of band-limited orthogonal signals for multichannel data transmission" cité dans la demande

## Description

### 1. Domaine de l'invention

### 1.1 Domaine général

Le domaine de l'invention est celui de la transmission ou de la diffusion de données numériques, ou de données analogiques et échantillonnées, destinées à être reçues notamment par des mobiles. Plus précisément, l'invention concerne des signaux produits à l'aide de nouvelles modulations, ainsi que les techniques de modulation et de démodulation correspondantes.

Depuis de nombreuses années, on cherche à construire des modulations adaptées à des canaux fortement non-stationnaires, tels que les canaux de transmission vers des mobiles. Dans de tels canaux, le signal émis est affecté d'évanouissements et de trajets multiples. Les travaux menés par le CCETT dans le cadre du projet européen EUREKA 147 (DAB: Digital Audio Broadcasting, ou Diffusion Audionumérique) ont montré l'intérêt, pour ce type de canaux, des modulations multiporteuses, et en particulier de l'OFDM (Orthogonal Frequency Division Multiplexing).

L'OFDM a été retenu dans le cadre de ce projet européen comme base de la norme DAB. Cette technique est également envisagée comme modulation pour la diffusion de programmes de télévision. Cependant, on constate un certain nombre de limitations (précisées par la suite) lorsqu'on aborde le problème de modulations codées à haute efficacité spectrale, telles que celles requises pour les applications de TV numérique.

### 1.2. Applications possibles

L'invention trouve des applications dans de très nombreux domaines, notamment lorsque une haute efficacité spectrale est souhaitée et que le canal est fortement non-stationnaire.

Une première catégorie d'applications concerne la radiodiffusion numérique terrestre, qu'il s'agisse d'image, de son et/ou de données. En particulier, l'invention peut s'appliquer à la diffusion synchrone, qui génère intrinsèquement des trajets multiples de longue durée. Elle s'applique également avantageusement à la diffusion vers des mobiles.

Une autre catégorie d'applications concerne les radiocommunications numériques. L'invention peut trouver notamment des applications dans des systèmes de communication numérique vers des mobiles à haut débit, dans le cadre par exemple de l'UMTS (projet RACE). Elle peut également être envisagée pour des réseaux locaux radio à haut débit (type HIPERLAN).

Une troisième catégorie d'applications est celle des transmissions sous-marines. Le canal de transmission en acoustique sous-marine est fortement perturbé du fait de la faible vitesse de transmission des ondes acoustiques dans l'eau. Ceci conduit à un étalement important des trajets multiples et du spectre Doppler. Les techniques de modulation multiporteuses sont donc bien adaptées à ce domaine, et tout particulièrement les techniques objet de la présente invention.

### 2. Etat de la technique

### 2.1. Remarques théoriques sur la représentation des signaux

Avant de présenter les signaux selon l'invention, on décrit ci-dessous les signaux connus. Cette description repose sur une approche générale des signaux multiporteuses définie par les inventeurs, et nouvelle en elle-même. Cette généralisation n'a en effet aucun équivalent dans l'état de la technique, et n'est nullement évidente pour l'homme du métier. Elle doit donc être considérée comme une partie de l'invention, et non comme appartenant à l'état de la technique.

On s'intéresse à des signaux réels (une grandeur électrique par exemple), à énergie finie, et fonction du temps. Les signaux peuvent donc être représentés par des fonctions réelles de **L**^{**2**} **(R)**. En outre, ces signaux sont à bande limitée w et leur spectre est contenu dans 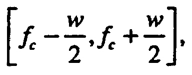 f_{c} étant la "fréquence porteuse" du signal. On peut donc de façon équivalente représenter un signal réel a(t) par le son enveloppe complexe s(t) avec:$\text{s} \text{(} \text{t} \text{) =} \text{e} {\text{}}^{{\text{-2iπf}}_{\text{c}} \text{t}} {\text{F}}_{\text{A}} \text{[} \text{α} \text{](} \text{t} \text{)}$ où F_{A} désigne le filtre analytique.

Le signal s(t) appartient à un sous espace vectoriel (caractérisé par la limitation de bande à ± $\frac{\text{w}}{\text{2}}$) de l'espace des fonctions complexes d'une variable réelle et de carré sommable **L**^{**2**} **(R)**. On peut définir cet espace vectoriel de deux façons différentes, selon qu'on le construit sur le corps des complexes ou le corps des réels. A chacun de ces espaces, on peut associer un produit scalaire à valeur dans **C** ou dans **R** et construire un espace de Hilbert. On appellera **H** l'espace de Hilbert construit sur le corps des complexes et **H**_{**R**} l'espace de Hilbert construit sur le corps des réels.

Les produits scalaires correspondants s'écrivent: 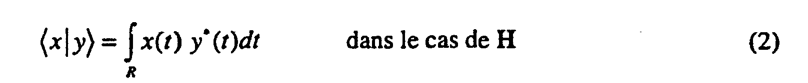 et

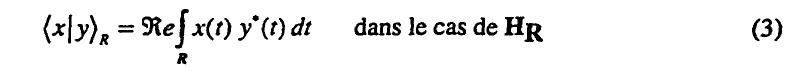

Les normes associées sont évidemment identiques dans les deux cas:

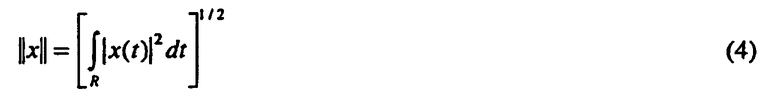

### 2.2. Principes généraux de l'OFDM

Les principes généraux de l'OFDM sont par exemple présentées dans le brevet français FR-86 09622 déposé le 2 juillet 1986. L'idée de base de cette technique est de transmettre des symboles codés comme des coefficients de formes d'ondes élémentaires confinées autant que possible dans le plan temps-fréquence, et pour lesquels le canal de transmission peut être considéré comme localement stationnaire. Le canal apparaît alors comme un simple canal multiplicatif caractérisé par la distribution du module des coefficients, qui suit une loi de Rice ou de Rayleigh.

On assure ensuite la protection contre les évanouissements à l'aide d'un code utilisable en décision pondérée, en association à un entrelacement en temps et en fréquence qui garantit que les symboles intervenant dans la maille minimale du code soient dans toute la mesure du possible affectés par des évanouissements indépendants.

Cette technique de codage avec entrelacement dans le plan temps-fréquence est connue sous le nom de COFDM. Elle est par exemple décrite dans le document [23] (voir annexe 1 (pour simplifier la lecture, la plupart des références de l'état de la technique sont listées dans cette annexe 1. Celle-ci, ainsi que les annexes 2 et 3 doivent bien sûr être considérées comme des éléments à part entière de la présente description)).

Il existe essentiellement deux types de modulations OFDM connues. Les appellations utilisées dans la littérature étant souvent ambiguës, nous introduirons ici des appellations nouvelles plus précises tout en rappelant la correspondance avec la littérature existante. Nous utiliserons l'appellation générique OFDM, suivi d'un suffixe précisant le type de modulation à l'intérieur de cette famille.

### 2.3. OFDM/QAM

### 2.3.1. Principes théoriques

Une première catégorie de modulations est constituée d'un multiplex de porteuses QAM (Quadrature Amplitude Modulation), ou éventuellement en QPSK (Quadrature Phase Shift Keying) dans le cas particulier de données binaires. Nous désignerons par la suite ce système sous le nom OFDM/QAM. Les porteuses sont toutes synchronisées, et les fréquences porteuses sont espacées de l'inverse du temps symbole. Bien que les spectres de ces porteuses se recouvrent, la synchronisation du système permet de garantir l'orthogonalité entre les symboles émis par différentes porteuses.

Les références [1] à [7] donnent un bon aperçu de la littérature disponible sur ce sujet.

Pour plus de simplicité dans l'écriture, et selon l'approche nouvelle de l'invention, on représentera les signaux par leur enveloppe complexe décrite ci-dessus. Dans ces conditions, l'équation générale d'un signal OFDM/QAM s'écrit:

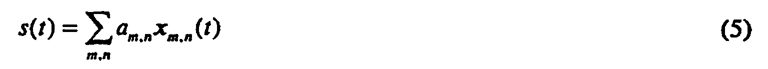

Les coefficients a_{m,n} prennent des valeurs complexes représentant les données émises. Les fonctions x_{m,n}(t) sont des translatées dans l'espace temps-fréquence d'une même fonction prototype x(t): 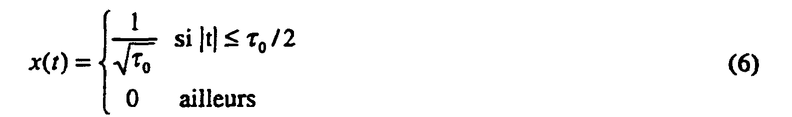 ${\text{x}}_{\text{m,n}} \text{(} \text{t} \text{) =} {\text{e}}^{\text{i}} \text{(} {\text{}}^{\text{2π} \text{m} {\text{ν}}_{\text{0}} \text{t} \text{+ϕ)}} {\text{x}}^{\text{(} \text{t} \text{-nτ}} {\text{0}}^{\text{)}} {\text{avec ν}}_{\text{0}} {\text{τ}}_{\text{0}} \text{= 1}$ ϕ étant une phase quelconque, que l'on peut arbitrairement fixer à 0. La fonction x(t) est centrée, c'est-à-dire que ses moments d'ordre 1 sont nuls, soit:$\text{∫} \text{t} \text{l} \text{x(t)} {\text{l}}^{\text{2}} \text{dt} \text{= ∫} \text{f} \text{|} \text{X(ƒ)} {\text{|}}^{\text{2}} \text{df} \text{= 0 ,}$ X(f) désignant la transformée de Fourier de x(t).

Dans ces conditions, on observe que:

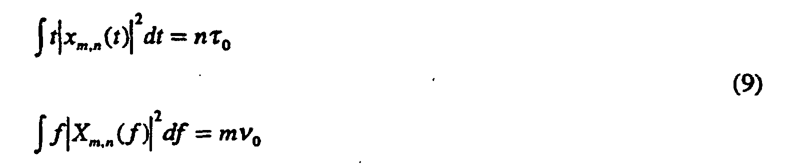

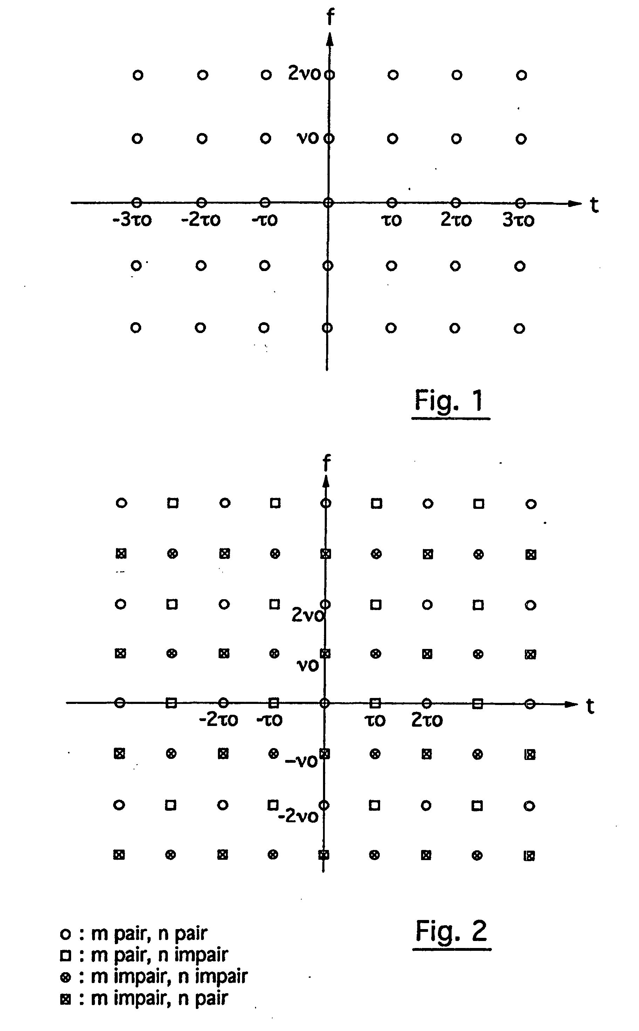

Les barycentres des fonctions de base forment donc un réseau du plan temps fréquence engendré par les vecteurs (τ₀, 0) et (0, ν₀), ainsi que cela est illustré en figure 1. Ce réseau est de densité unité, c'est à dire que ν₀τ₀ = 1. On pourra se reporter à l'article [9] pour une discussion plus détaillée sur ce sujet.

La fonction prototype x(t) a ceci de particulier que les fonctions {x_{m,n}} sont orthogonales entre elles, et plus précisément constituent une base hilbertienne de **L**^{**2**} **(R)**, soit :

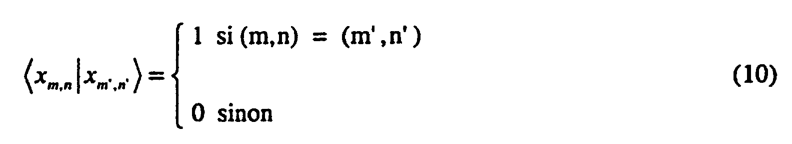

Projeter un signal sous cette base équivaut simplement à découper le signal en séquences de durée τ₀ et à représenter chacune de ces séquences par le développement en série de Fourier correspondant. Ce type de décomposition constitue un premier pas vers une localisation à la fois en temps et en fréquence, par opposition à l'analyse de Fourier classique, qui assure une localisation fréquentielle parfaite avec une perte totale de l'information temporelle.

Malheureusement, si la localisation temporelle est excellente, la localisation fréquentielle est beaucoup moins bonne, du fait de la décroissante lente de X(f). Le théorème de Balian-Low-Coifman-Semmes (voir [9], p 976) montre d'ailleurs que si l'on appelle X la transformée de Fourier de x, tx(t) et fX(f) ne peuvent être simultanément de carré sommable.

### 2.3.2. L'OFDM/QAM avec intervalle de garde

D'une manière générale, on peut caractériser la tolérance d'une modulation OFDM vis-à-vis des trajets multiples et de l'étalement Doppler par un paramètre mesurant de manière globale la variation du niveau d'interférence entre symboles (IES) en fonction d'un décalage en temps ou en fréquence. La justification de ce concept est donnée en annexe 2. Ce paramètre de tolérance est appelé ξ et est défini par la relation:$\text{ξ =1/4πΔtΔ} \text{f}$ avec:${\text{Δt}}^{\text{2}} {\text{∫|x(t)|}}^{\text{2}} \text{dt} \text{= ∫} {\text{t}}^{\text{2}} {\text{(x(t)|}}^{\text{2}} \text{dt}$${\text{Δf}}^{\text{2}} \text{∫} \text{|} \text{X(f)} {\text{|}}^{\text{2}} {\text{df = ∫f}}^{\text{2}} \text{|} \text{X(f)} {\text{|}}^{\text{2}} \text{df}$

En vertu de l'inégalité de Heisenberg, ξ ne peut pas dépasser l'unité.

Compte tenu du théorème de Balian-Low-Coifman-Semmes cité précédemment, le paramètre ξ vaut 0 pour l'OFDM/QAM. Il s'agit là d'un défaut important de la modulation OFDM/QAM telle que décrite ci-dessus. Ceci se caractérise en pratique par une forte sensibilité aux erreurs temporelles, et par conséquent aux trajets multiples.

Ce défaut peut être contourné par l'utilisation d'un intervalle de garde décrit par exemple dans [5]. Il s'agit là d'un artifice consistant à prolonger la fenêtre rectangulaire de la fonction prototype. La densité du réseau des symboles de base est alors strictement inférieure à l'unité.

Cette technique est possible du fait que l'on retrouve à l'intérieur d'un symbole prolongé par un intervalle de garde une infinité de versions translatées du symbole initial. Bien sûr, ceci ne fonctionne que parce que la fonction prototype est une fenêtre rectangulaire. En ce sens, l'OFDM/QAM avec intervalle de garde constitue un point singulier unique.

La modulation OFDM/QAM avec intervalle de garde est à la base du système DAB. Cet intervalle de garde permet de limiter l'interférence entre symboles, au prix d'une perte de performance, puisqu'une partie de l'information émise n'est pas réellement utilisée par le récepteur, mais sert seulement à absorber les trajets multiples.

Ainsi, dans le cas du système DAB, où l'intervalle de garde représente 25% du symbole utile, la perte est de 1 dB. En outre, il existe une perte supplémentaire, due au fait que pour obtenir une efficacité spectrale globale donnée, il faut compenser la perte due à l'intervalle de garde par un meilleure efficacité du code utilisé.

Cette perte est marginale dans le cas du système DAB, parce que l'efficacité spectrale est faible. Par contre, si l'on vise une efficacité spectrale globale de 4 bits/Hz, il faut utiliser un code à 5 bits/Hz, soit selon le théorème de Shannon une perte de l'ordre de 3 dB. La perte globale est donc dans ce cas d'environ 4 dB.

### 2.3.3. Autres systèmes OFDM/QAM

On peut imaginer d'autres systèmes de type OFDM/QAM. Malheureusement, aucune modulation QAM filtrée (c'est à dire utilisant une mise en forme conventionnelle de type demi-Nyquist (ou, plus exactement, « racine carrée de Nyquist »)), ne vérifie les contraintes d'orthogonalité requises. Les fonctions prototypes connues vérifiant les critères d'orthogonalité requis sont:
- la fenêtre rectangulaire ;
- le sinus cardinal.

Ces deux exemples sont triviaux, et apparaissent duaux l'un de l'autre par transformée de Fourier. Le cas de la fenêtre rectangulaire correspond à l'OFDM/QAM sans intervalle de garde. Le cas du sinus cardinal correspond à un multiplex fréquentiel classique (c'est-à-dire dont les porteuses ont des spectres disjoints) avec un roll-off de 0%, ce qui constitue un cas asymptotique difficilement réalisable en pratique.

Dans chacun de ces cas, on observe que la fonction prototype est parfaitement bornée, soit en temps, soit en fréquence, mais possède une décroissance médiocre (en 1/t ou 1/f) dans le domaine dual.

Le théorème de Balian-Low-Coifman-Semmes laisse d'ailleurs peu d'espoir que des solutions satisfaisantes puissent exister. Comme indiqué précédemment, ce théorème démontre que tx(t) et fX(f) ne peuvent être simultanément de carré sommable. On ne peut donc pas espérer trouver une fonction x(t) telle que x(t) et X(f) décroissent simultanément avec un exposant inférieur à -3/2.

Ceci n'exclut d'ailleurs pas que puissent exister des fonctions satisfaisantes aux yeux d'un ingénieur. Néanmoins, un article récent [10] traitant de ce sujet exhibe un autre exemple de fonction prototype ayant les propriétés requises. L'allure de la fonction prototype proposée dans cet article est très éloignée de ce que l'on peut souhaiter en terme de concentration temporelle. Il est donc probable qu'il n'existe pas de solution satisfaisante de type OFDM/QAM.

En conclusion, l'OFDM/QAM, correspondant à l'utilisation d'un réseau de densité 1 et à des coefficients a_{m,n} complexes ne peut être mis en pratique que dans le cas d'une fenêtre temporelle rectangulaire et de l'utilisation d'un intervalle de garde. L'homme du métier cherchant d'autres modulations est donc conduit à se tourner vers les techniques décrites ci-dessous sous le nom d'OFDM/OQAM.

### 2.4. OFDM/OQAM

Une deuxième catégorie de modulations utilise en effet un multiplex de porteuses OQAM (Offset Quadrature Amplitude Modulation). Nous désignerons par la suite ce système sous le nom OFDM/OQAM. Les porteuses sont toutes synchronisées, et les fréquences porteuses sont espacées de la moitié de l'inverse du temps symbole. Bien que les spectres de ces porteuses se recouvrent, la synchronisation du système et le choix des phases des porteuses permet de garantir l'orthogonalité entre les symboles émis par différentes porteuses. Les références [11-18] donnent un bon aperçu de la littérature disponible sur ce sujet.

Pour plus de simplicité dans l'écriture, on représentera les signaux sous leur forme analytique. Dans ces conditions, l'équation générale d'un signal OFDM/OQAM s'écrit:

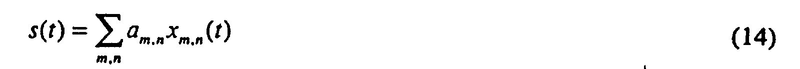

Les coefficients a_{m,n} prennent des valeurs réelles représentant les données émises. Les fonctions x_{m,n}(t) sont des translatées dans l'espace temps-fréquence d'une même fonction prototype x(t): 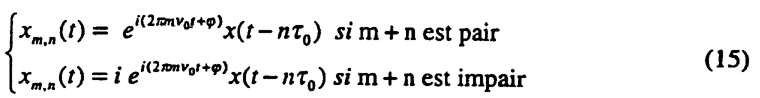 avec ν₀τ₀= 1/2,
ϕ étant une phase quelconque que l'on peut arbitrairement fixée égale à 0.

Les barycentres des fonctions de base forment donc un réseau du plan temps-fréquence engendré par les vecteurs (τ₀, 0) et (0, ν₀), tel qu'illustré en figure 2.

Ce réseau est de densité 2. Les fonctions x_{m,n}(t) sont orthogonales au sens du produit scalaire dans R. Dans les approches connues, la fonction prototype est bornée en fréquence, de telle sorte que le spectre de chaque porteuse ne recouvre que celui des porteuses adjacentes. En pratique, les fonctions prototypes considérées sont des fonctions paires (réelles ou éventuellement complexes) vérifiant la relation suivante:

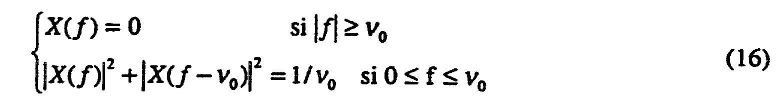

Un choix possible pour x(t) est la réponse impulsionnelle d'un filtre demi-Nyquist 100% roll-off, soit

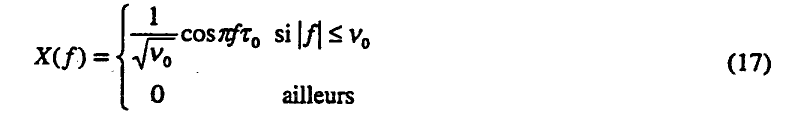

Lorsqu'on observe x(t) et sa transformée de Fourier, on note que X(f) est à support borné et que x(t) décroît en t⁻², c'est à dire un résultat notablement meilleur que la limite théorique découlant du théorème de Balian-Low-Coifman-Semmes. Les formes d'onde élémentaires sont mieux localisées dans le plan temps fréquence que dans le cas de l'OFDM/QAM, ce qui confère à cette modulation un meilleur comportement en présence de trajets multiples et de Doppler. Comme précédemment, on peut définir le paramètre ξ mesurant la tolérance de la modulation au délai et au Doppler. Ce paramètre ξ vaut 0.865.

### 3. Inconvénients des systèmes connus

Ces systèmes connus présentent de nombreux inconvénients et limites, notamment dans les canaux très perturbés, et lorsque une haute efficacité est requise.

### 3.1. OFDM/QAM

Le problème principal du système OFDM/QAM est qu'il nécessite impérativement l'utilisation d'un intervalle de garde. Comme indiqué précédemment, ceci engendre une perte d'efficacité notable lorsque l'on vise de hautes efficacités spectrales.

De plus, les symboles émis sont mal concentrés dans le domaine fréquentiel, ce qui limite également les performances dans des canaux fortement non-stationnaires. En particulier, cet étalement rend difficile l'utilisation d'égaliseurs.

### 3.2. OFDM/OQAM

A l'inverse, les performances fréquentielles de l'OFDM/OQAM sont plutôt satisfaisantes et le problème de la perte liée à l'intervalle de garde ne se pose pas. En revanche, la réponse impulsionnelle de la fonction prototype a une décroissance temporelle relativement lente, soit en 1/x².

Ceci implique deux types de difficultés. Tout d'abord, la forme d'onde peut difficilement être tronquée sur un intervalle de temps court, ce qui implique un traitement complexe au niveau du récepteur. En outre, ceci complique également d'éventuels systèmes d'égalisation.

En d'autres termes, l'efficacité des techniques OFDM/OQAM est supérieure à celle de l'OFDM/QAM, mais ces techniques s'avèrent plus complexes à mettre en oeuvre, et donc coûteuses, en particulier dans les récepteurs.

### 4. Présentation de l'invention

### 4.1 Objectifs de l'invention

L'invention a notamment pour objectif de pallier ces différents inconvénients et limitations de l'état de la technique.

Ainsi, un objectif de l'invention est de fournir un signal numérique destiné à être transmis ou diffusé vers des récepteurs, qui permette d'obtenir de meilleures performances dans des canaux non stationnaires, et tout particulièrement dans des canaux fortement non stationnaires.

L'invention a également pour objectif de fournir un tel signal, permettant d' obtenir une haute efficacité spectrale.

Un autre objectif de l'invention est de fournir un tel signal, qui évite les inconvénients de l'OFDM/QAM liés à l'intervalle de garde, tout en conservant une réponse temporelle, de la fonction prototype aussi concentrée que possible, de façon notamment à simplifier le traitement au niveau du récepteur.

L'invention a également pour objectif de fournir un tel signal, permettant la réalisation de récepteurs à complexité et coût limités, en particulier en ce qui concerne la démodulation et l'égalisation.

Un objectif complémentaire de l'invention est de fournir des émetteurs, des récepteurs, des procédés de transmission ou de diffusion, des procédés de réception et des procédés de construction, c'est-à-dire de définition, d'une modulation correspondants à un tel signal.

### 4.2 Caractéristiques principales de l'invention

Ces objectifs, ainsi que d'autres qui apparaîtront par la suite, sont atteints selon l'invention par un signal multiporteuse destiné à être transmis vers des récepteurs numériques, notamment dans un canal de transmission non-stationnaire, correspondant au multiplexage en fréquence de plusieurs porteuses élémentaires correspondants chacunes à une série de symboles, deux symboles consécutifs étant séparés d'un temps symbole τ₀, signal dans lequel, d'une part, l'espacement ν₀ entre deux porteuses voisines est égal à la moitié de l'inverse du temps symbole τ₀,
et dans lequel, d'autre part, chaque porteuse subit un filtrage de mise en forme de son spectre présentant une largeur de bande strictement supérieure à deux fois ledit espacement entre porteuses ν₀. Ce spectre est choisi de façon que chaque élément de symbole soit concentré autant que possible à la fois dans le domaine temporel et dans le domaine fréquentiel.

Notamment, un tel signal peut répondre à l'équation suivante : 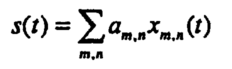 où :
a_{m,n} est un coefficient réel représentatif du signal source, choisi dans un alphabet de modulation prédéterminé:
m est un entier représentant la dimension fréquentielle ;
n est un entier représentant la dimension temporelle;
t représente le temps;
x_{m,n}(t) est une fonction de base, translatée dans l'espace temps-fréquence d'une même fonction prototype x(t) paire prenant des valeurs réelles ou complexes, soit :${\text{x}}_{\text{m,n}} \text{(} \text{t} \text{) = ±} {\text{i}}^{\text{m} \text{+} \text{n}} \text{e} {\text{}}^{\text{i} \text{(2π} \text{m} {\text{ν}}_{\text{0}} \text{τ+ϕ)}} \text{x} \text{(} \text{t} \text{+} \text{n} {\text{τ}}_{\text{0}} {\text{) avec ν}}_{\text{0}} {\text{τ}}_{\text{0}} \text{= 1/2}$
où ϕ est un paramètre de phase arbitraire,
la transformée de Fourier X(f) de la fonction x(t) ayant un support s'étendant au-delà de l'intervalle [-ν₀,ν₀],
et où lesdites fonctions de base {x_{m.n}} sont orthogonales entre elles, la partie réelle du produit scalaire de deux fonctions de base différentes étant nulle.

Le symbole "±" indique que x_{m,n}(t) peut prendre indifféremment un signe négatif ou positif. Il ne signifie pas, bien sûr, que x_{m,n}(t) prend les deux valeurs.

Ainsi, l'invention repose sur un système de modulation qui utilise des fonctions prototypes aussi concentrées que possible dans le plan temps-fréquence. L'intérêt de cette approche est de disposer d'une modulation produisant un signal évitant les inconvénients de l'OFDM/QAM liés à l'intervalle de garde, tout en conservant une réponse temporelle de la fonction prototype aussi concentrée que possible, de façon à simplifier le traitement au niveau du récepteur.

En d'autres termes, l'invention a pour objet de nouveaux systèmes de modulation construits comme l'OFDM/OQAM sur un réseau orthogonal de densité 2, sans pour autant que la fonction prototype soit à support borné en fréquence. Parmi les modulations proposées, on trouve soit des modulations utilisant des fonctions prototypes à support borné en temps, soit des fonctions prototypes qui ne sont bornés ni en temps ni en fréquence, mais qui présentent par compte des propriétés de décroissance rapide à la fois en temps et en fréquence, et une concentration quasi-optimale dans le plan temps-fréquence.

De tels signaux ne sont nullement évidents pour l'homme du métier, au vu de l'état de la technique. Comme indiqué précédemment, il existe fondamentalement deux modes de construction de modulations de type OFDM.

Le premier mode de construction connu utilise un réseau de densité 1. Cette première solution utilise une base de décomposition des signaux ou tout signal est découpe en intervalles, chaque intervalle étant ensuite decompose sous forme de série de Fourier. C'est la solution OFDM/QAM. La littérature donne peu d'exemples de solutions alternatives construites sur le même réseau, et les résultats obtenus sont d'un faible intérêt pratique [10].

En outre, la technique OFDM/QAM est la seule qui puisse bénéficier de la méthode de l'intervalle de garde. La solution OFDM/QAM est donc un point singulier qui ne permet pas d'extensions.

Le deuxième mode de construction connue (OFDM/OQAM) utilise un réseau de densité 2. L'orthogonalité entre symboles centrés sur une même fréquence ou sur des fréquences adjacentes est garantie par une mise en forme des signaux de type demi-Nyquist et par le choix adéquat de la phase des signaux. Enfin, l'orthogonalité au delà des fréquences adjacentes est garantie par le fait que les supports fréquentiels sont disjoints.

Par conséquent, la construction de nouvelles modulations ne vérifiant pas cette propriété n'est pas évidente.

Toutes les variantes de l'invention décrites ci-dessous présentent l'avantage d'utiliser une fonction prototype, soit limitée dans le domaine temporel, soit à décroissance rapide, de telle sorte que la fonction puisse être aisément tronquée.

Selon une première variante, ladite fonction prototype x(t) est une fonction paire, nulle en dehors de l'intervalle [-τ₀,τ₀], et vérifiant la relation :

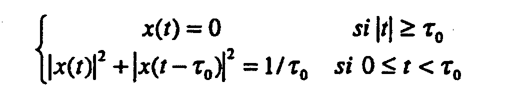

De façon avantageuse, ladite fonction prototype x(t) est définie par:

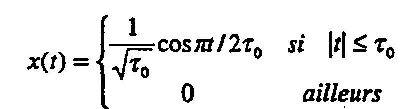

Dans ce premier cas (appelé par la suite OFDM/MSK), les performances en terme de résistance au Doppler et aux trajets multiples sont équivalentes à l'OFDM/OQAM, et la réalisation du récepteur est simplifiée.

Selon une deuxième variante de l'invention, ladite fonction prototype x(t) est caractérisée par l'équation: 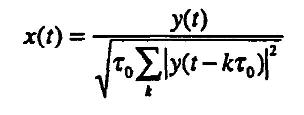 la fonction y(t) étant définie par sa transformée de Fourier Y(f): 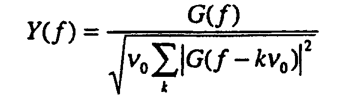 où G(f) est une fonction gaussienne normalisée du type :$\text{G} \text{(} \text{f} {\text{)= (2α)}}^{\text{1/4}} {\text{e}}^{\text{-πα}} {\text{}}^{{\text{f}}^{\text{2}}}$ α étant un paramètre réel strictement positif. k varie de -∞ à +∞.

De façon avantageuse, le paramètre α est égal à l'unité. La modulation correspondante est appelée par la suite OFDM/IOTA. Dans ce cas, la fonction prototype correspondante, notée 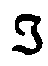 , est identique à sa transformée de Fourier.

La réalisation du récepteur est plus simple que dans le cas de l'OFDM/OQAM, bien que légèrement plus complexe que dans le cas précédent, mais les performances sont sensiblement supérieures.

L'invention concerne également un procédé de transmission d'un signal numérique, notamment dans un canal de transmission non-stationnaire, comprenant les étapes suivantes:
- codage canal d'un signal numérique à transmettre, délivrant des coefficients numériques réels a_{m,n} choisis dans un alphabet prédéterminé ;
- construction d'un signal s(t) répondant à l'équation définie ci-dessus ;
- émission d'un signal ayant pour enveloppe complexe ledit signal s(t) vers au moins un récepteur.

De façon avantageuse, un tel procédé comprend de plus une étape d'entrelacement en fréquence et/ou en temps, appliquée aux éléments binaires formant ledit signal numérique à transmettre ou aux coefficients numériques a_{m,n}.

Cela permet d'assurer des performances optimales dans des canaux non-stationnaires.

L'invention concerne également les émetteurs d'un tel signal.

L'invention concerne encore un procédé de réception d'un signal tel que décrit ci-dessus, qui comprend les étapes suivantes :
- réception d'un signal ayant pour enveloppe complexe un signal r(t) correspondant au signal s(t) à l'émission ;
- estimation de la réponse du canal de transmission, comprenant une estimation de la réponse en phase θ_{m,n} et de la réponse en amplitude ρ_{m,n} ;
- démodulation dudit signal r(t), comprenant les étapes suivantes :
   - multiplication dudit signal r(t) par la fonction prototype x(t) ;
   - repliement de la forme d'onde filtrée modulo 2τ₀ ;
   - application d'une transformée de Fourier (FFT) ;
   - correction de la phase θ_{m,n} induite par le canal de transmission ;
   - correction de la phase correspondant au terme i^{m+n} ;
   - sélection de la partie réelle du coeeficient obtenu *ã*_{*m,n*} correspondant au coefficient a_{m,n} émis pondéré par la réponse en amplitude ρ_{m,n} du canal de transmission.

De façon préférentielle, ce procédé de réception comprend une étape de désentrelacement en fréquence et/ou en temps desdits coefficients numériques réels ã_{m,n} et, éventuellement, des valeurs correspondantes ρ_{m,n} de la réponse de l'amplitude du canal, ledit désentrelacement étant inverse de un entrelacement mis en oeuvre à l'émission, et/ou une étape de décodage en décision pondérée adapté au codage canal mis en oeuvre à l'émission.

L'invention concerne également les récepteurs correspondants.

Enfin, l'invention concerne également un procédé préférentiel de construction d'une fonction prototype x(t) pour un signal tel que décrit ci-dessus, comprenant les étapes suivantes :
- sélection d'une fonction gaussienne G(f) normalisée du type :$\text{G} \text{(} \text{f} {\text{) = (2α)}}^{\text{1/4}} \text{e} {\text{}}^{{\text{-παf}}^{\text{2}}} \text{;}$
- détermination de ladite fonction prototype x(t) telle que : 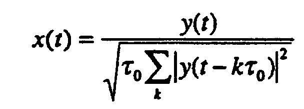 la fonction y(t) étant définie par sa transformée de Fourier Y(f):

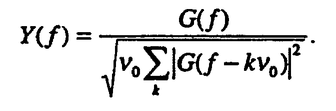

Ce procédé permet notamment de définir la fonction prototype 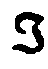 , décrite ci-dessus.

### 5. Description de modes de réalisation particuliers de l'invention

### 5.1. Liste des figures

- la figure 1 illustre un réseau de densité 1, correspondant à celui mis en oeuvre dans le cas de la modulation connue OFDM/QAM ;
- la figure 2 illustre un réseau de densité 2, correspondant à celui mis en oeuvre dans le cas de la modulation connue OFDM/OQAM et dans le cas de l'invention ;
- les figures 3A à 3D, 4C à 4D, 5A à 5D, 6A à 6D et 7A à 7D illustrent respectivement les modulations connues OFDM/QAM (3), OFDM/QAM avec intervalle de garde (4), OFDM/OQAM (5) et les modulations de l'invention OFDM/MSK (6) et OFDM/IOTA (7), selon les aspects suivants :
   . A : la fonction prototype x(t) ;
   . B : la transformée de Fourier en linéaire de la fonction prototype ;
   . C : le module de la fonction d'ambiguïté en linéaire (telle que définie dans l'annexe 2) ;
   . D : la fonction d'intersymbole (telle que définie dans l'annexe 2) ;
- la figure 7E montre en échelle logarithmique la décroissance du signal OFDM/IOTA ;
- la figure 8 la fonction d'ambiguïté d'une fonction gaussienne ;
- la figure 9 est un schéma synoptique d'un émetteur (et du procédé d'émission correspondant) utilisable selon l'invention ;
- la figure 10 est un schéma synoptique d'un récepteur (et du procédé de réception correspondant) utilisable selon l'invention ;
- la figure 11 illustre plus précisément le procédé de démodulation mis en oeuvre dans le récepteur de la figure 10.

### 5.2. Principes théoriques des signaux selon l'invention

Toutes les fonctions de base de l'OFDM/OQAM définies en (15) peuvent se réécrire sous la forme:${\text{x}}_{\text{m,n}} \text{(} \text{t} \text{) = ±} {\text{i}}^{\text{m+n}} \text{e} {\text{}}^{{\text{2iπmν}}_{\text{0}} \text{t}} \text{x(t} \text{-} \text{n} {\text{τ}}_{\text{0}} {\text{) avec ν}}_{\text{0}} {\text{τ}}_{\text{0}} \text{= 1/ 2}$

Les barycentres des fonctions de base forment donc un réseau du plan temps fréquence engendré par les vecteurs (τ₀, 0) et (0, ν₀ ) (voir figure 2). Ce réseau. est de densité 2, c'est à dire que ν₀τ₀ = 1/2. Comme indiqué en [16], ces fonctions constituent une base hilbertienne de **H**_{**R**}. Afin de simplifier l'écriture, nous omettrons par la suite les inversions de signe.

D'une manière générale, on cherche les conditions sur x(t) pour que la famille {x_{m,n}} constitue une base hilbertienne de **H**_{**R**}. On imposera que x(t) soit une fonction paire.
Le produit scalaire de x_{m,n} et de x_{m',n'} peut s'écrire : 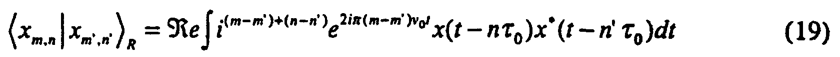 soit, en posant *t*'=*t*-(*n*+*n*')τ₀/2 et τ'₀=(n-n')τ₀:

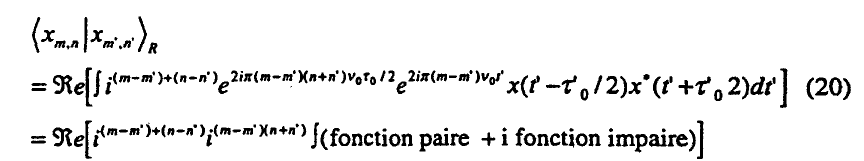

L'orthogonalité est donc obtenue si le coefficient de l'intégrale est un nombre imaginaire pur. L'analyse de ce coefficient montre qu'il suffit pour cela que m-m' ou que n-n' soit impair.

Le réseau peut donc se décomposer en quatre sous-réseaux, tel que cela apparaît sur la figure 2 ({m pair, n pair},{m pair, n impair},{m impair n pair},{m impair, n impair}) qui sont orthogonaux entre eux (toute fonction de l'un des sous-réseaux est orthogonale à toute fonction d'un autre sous-réseau). Une condition suffisante pour que {x_{m,n}} constitue une base hilbertienne est donc que :$\text{〈} {\text{x}}_{\text{m,n}} {\text{|x}}_{\text{m',n'}} {\text{〉}}_{\text{R}} \text{= 0 ∀} \text{m} \text{-} \text{m' pair} \text{,∀'} \text{n} \text{-} \text{n} \text{'} \text{pair} \text{, (m,n)≠ (m',n' )}$

Il suffit donc de trouver une fonction x(t) paire telle que les fonctions du type:${\text{x}}_{\text{2m,2n}} \text{(t)} \text{=} \text{e} {\text{}}^{{\text{4iπmν}}_{\text{0}} \text{t}} \text{x} \text{(} \text{t} \text{- 2} \text{n} {\text{τ}}_{\text{0}} \text{.)}$ soient orthogonales entre elles au sens du produit scalaire dans R. D'ailleurs, si tel est le cas, ces fonctions sont aussi orthogonales au sens du produit scalaire dans C, pour des raisons de symétrie analogues à celles évoquées ci-dessus. Une autre façon d'exprimer cette condition est d'utiliser la fonction d'ambiguïté de x [19]:${\text{A}}_{\text{x}} \text{(τ,ν)=} \text{∫x(t+τ} \text{/2)x* (} \text{t} \text{-τ/} \text{2} \text{)} {\text{e}}^{\text{-2πνt}} \text{dt}$

Il suffit alors de trouver une fonction x(t) paire telle que:${\text{A}}_{\text{x}} \text{(2} \text{n} {\text{τ}}_{\text{0}} \text{,} \text{2} {\text{mν}}_{\text{0}} \text{)= 0, ∀d(m,n)≠(0,0)}$

Si l'on compare le problème ainsi posé à celui de trouver une base hilbertienne au sens du produit scalaire dans C, les contraintes d'orthogonalité sont nettement moins fortes, puisque le réseau concerné est deux fois moins dense. En effet, les fonctions de base sont centrées sur les points du réseau {*2mν*_{*0*}*,2nτ*_{*0*}}*,* c'est à dire un réseau de densité 1/2. On voit donc apparaître ici de façon intuitivement évidente les raisons de l'inapplicabilité du théorème de Balian-Low-Coifman-Semmes.

Dans le cas de l'OFDM/OQAM, l'orthogonalité des fonctions *x*_{2*m*,2*n*} (*t*) entre elles est obtenue par deux contraintes de natures différentes. En effet, si m ≠ m', 〈*x*_{2*m*,2*n*}|*x*_{2*m*',2*n*}.〉 est nul parce que ces fonctions ont des spectres disjoints. Par ailleurs, 〈*x*_{2*m*,2*n*}|*x*_{2*m*,2*n'*}〉 est nul parce que X(f) a une mise en forme de type demi-Nyquist.

Comme le montre l'abondante littérature déjà citée, l'homme du métier considère qu'il est impératif de vérifier ces deux contraintes. En particulier, il estime que la fonction prototype doit être à support borné en fréquence.

### 5.3. Principes généraux de l'invention

L'invention repose sur une approche tout à fait nouvelle des signaux multiporteuses du type OFDM/OQAM, selon laquelle l'orthogonalité est obtenue non plus par le respect des deux contraintes mentionnées ci-dessus, mais par une définition spécifiques des fonctions prototypes.

En d'autres termes, l'invention a pour objet de nouveaux signaux, basés sur des systèmes de modulation construits comme l'OFDM/OQAM sur un réseau orthogonal de densité 2, sans pour autant que la fonction prototype soit à support borné en fréquence.

Le principe utilisé est de construire des réseaux orthogonaux de densité 1/2, puis d'en déduire des réseaux de densité 2 par un choix judicieux des phases des signaux.

De très nombreux signaux peuvent être construits selon la technique de l'invention. On donne ci-dessous deux exemples non limitatifs de tels signaux, appelés respectivement OFDM/MSK et OFDM/IOTA. Une méthode particulière pour construire de tels signaux est également donnée, à titre d'exemple non limitatif, en annexe 3. Cette méthode fait bien sûr partie de l'invention, et n'a été renvoyée en annexe que pour simplifier la lecture de la présente description.

### 5.4. La modulation OFDM/MSK

Nous considérons ici une nouvelle modulation construite selon la même équation générique que la modulation OFDM/OQAM (équations 14 et 15), mais à partir d'une fonction prototype différente. Nous la baptiserons OFDM/MSK parce que chaque porteuse est modulée en MSK [20]. La fonction prototype s'écrit:

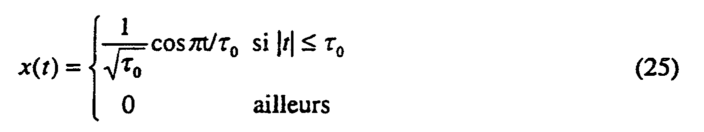

En fait, on constate a posteriori que cette modulation peut être considérée comme duale de l'OFDM/OQAM, puisqu'elle correspond à un échange des axes temps et fréquence. L'intérêt essentiel de cette modulation par rapport à l'OFDM/OQAM est que la fonction prototype est strictement limitée dans le temps, ce qui simplifie notablement l'implémentation du récepteur, puisque le nombre de coefficients du filtre d'entrée est considérablement réduit. Par ailleurs, les performances en présence de trajets multiples sont inchangées, le paramètre ξ étant identique.

### 5.5. La modulation IOTA

La modulation OFDM/IOTA résulte en revanche d'une approche totalement nouvelle et originale dans le domaine du traitement de signal que nous baptisons transformée IOTA (pour "Isotropic Orthogonal Transform Algorithm"), et décrite en annexe 3.

### 5.5.1. Equation du signal

Nous considérons ici une nouvelle modulation construite selon la même équation générique que la modulation OFDM/OQAM (équations 14 et 15), mais à partir d'une fonction prototype différente. Nous la baptiserons OFDM/IOTA en raison du choix de la fonction prototype. La fonction prototype s'écrit: 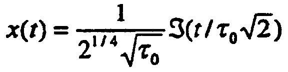 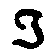 désignant la fonction IOTA définie en annexe 3.

On notera que la méthode de construction donnée en annexe 3 permet d'obtenir une infinité de solutions, la fonction IOTA constituant une solution remarquable. Les fonctions de base de la modulation OFDM/IOTA s'écrivent donc: 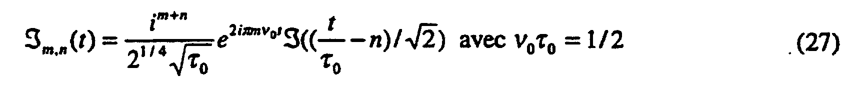 Le signal émis s'écrit donc: 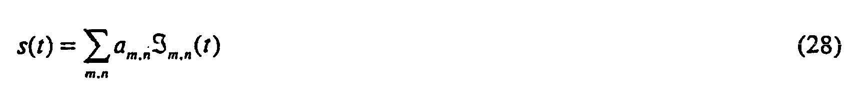 avec:

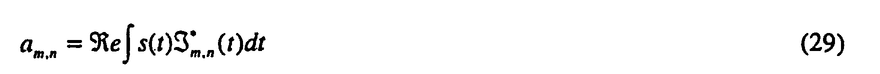

### 5.5.2. Commentaires des figures et avantages liés à la décroissance rapide

Afin de mieux mettre en évidence, de façon visuelle, les avantages de l'invention, on présente pour chaque modulation discutée précédemment :
. A : la fonction prototype x(t) ;
. B : la transformée de Fourier en linéaire de la fonction prototype ;
. C : le module de la fonction d'ambiguïté en linéaire (telle que définie dans l'annexe 2) ;
. D : la fonction d'intersymbole (telle que définie dans l'annexe 2).

Les vues de la fonction d'ambiguïté (figures indicées C) permettent de juger du confinement dans le plan temps-fréquence de la fonction prototype. Les vues de la fonction d'intersymbole (figures indicées D) permettent d'apprécier la sensibilité d'une modulation au délai et au Doppler. Les erreurs de phase ne sont pas considérées, puisque toutes les modulations sont équivalentes sur ce plan.

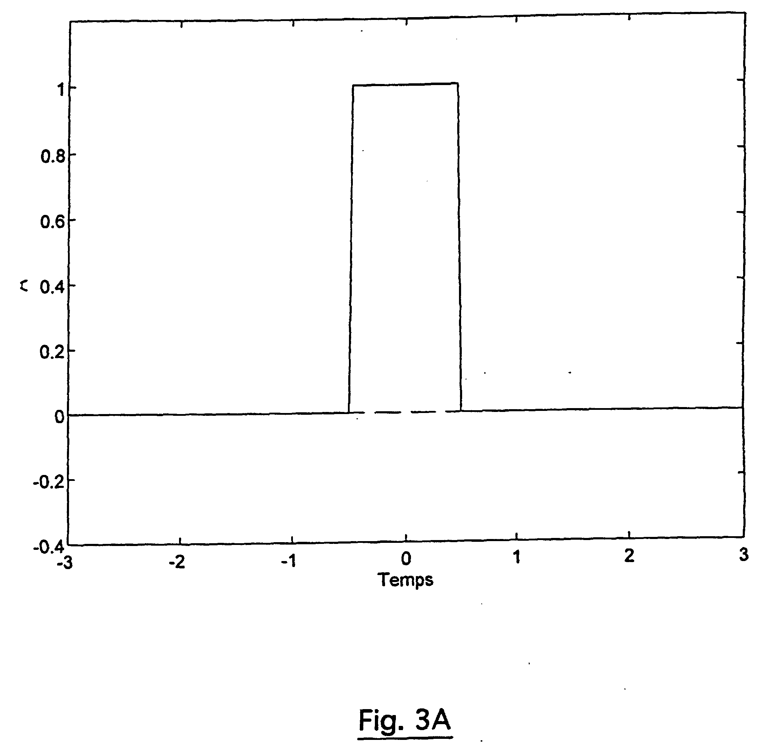

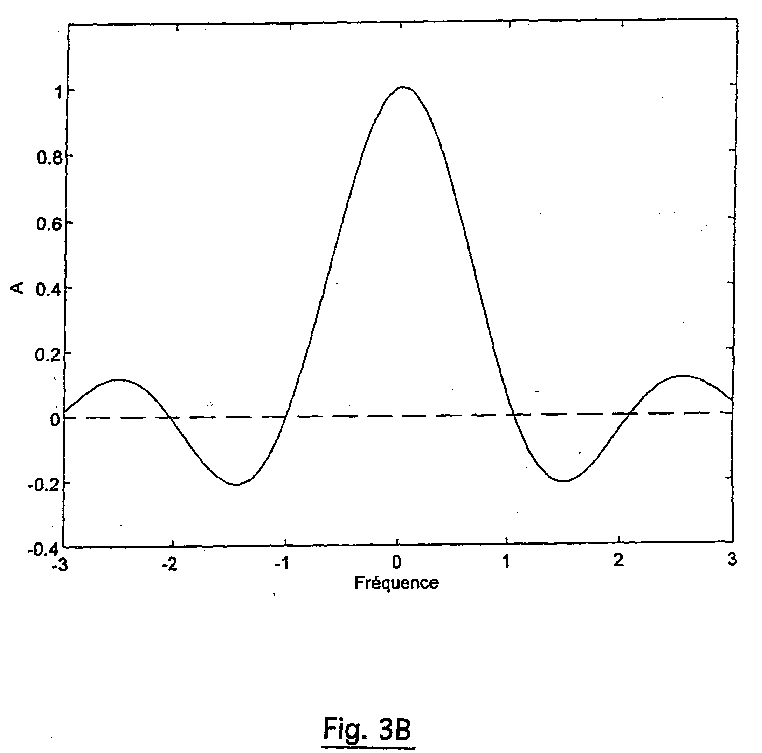

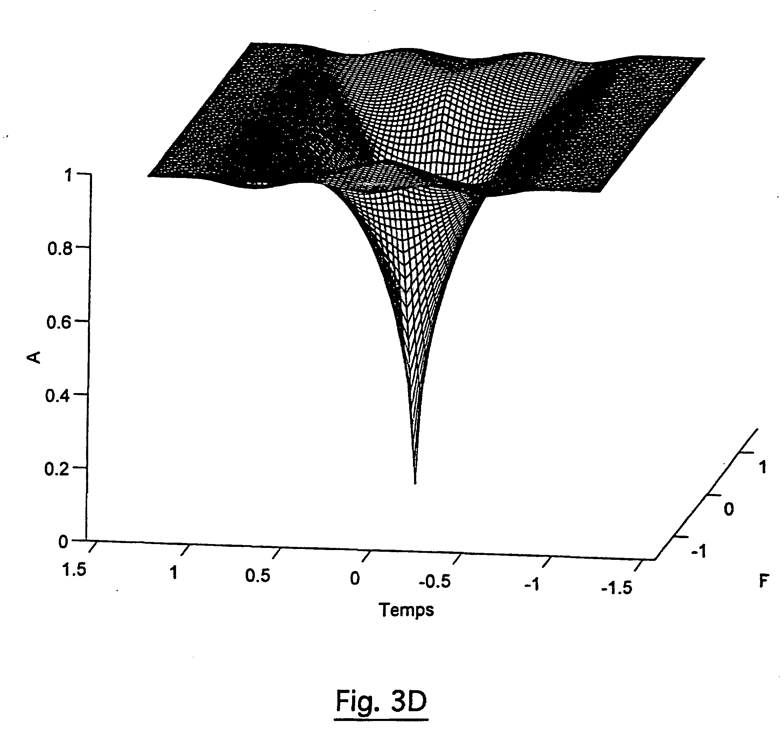

Les figures 3A à 3D concernent le cas connu de l'OFDM/QAM classique. Le défaut principal de cette modulation n'est pas, comme pourrait le faire penser la réponse en fréquence de la fonction prototype, la faible décroissance du niveau des lobes secondaires.

En fait, la sensibilité de l'OFDM aux erreurs fréquentielles n'est que légèrement supérieure à celle des autres modulations considérées. L'IES a par contre une statistique différente, qui se traduit par une fermeture horizontale de l'oeil équivalente à celle d'une modulation à roll-off nul. II existe donc des traces, certes improbables, mais qui peuvent créer des erreurs systématiques en l'absence de codage. Ce détail est "inesthétique", mais sans conséquence réelle en présence de codage. Par contre, cette faible décroissance fait que l'énergie d'IES se répartit sur un grand nombre de symboles voisins, ce qui rend très délicate toute tentative d'égalisation.

Paradoxalement, le véritable problème vient de la limitation brutale de la réponse temporelle, qui correspond à une fonction d'ambiguïté triangulaire selon cet axe. Ceci donne une fonction d'intersymbole avec une très forte sensibilité aux erreurs temporelles : la pente est verticale et le paramètre ξ est donc nul. C'est ce qui justifie l'utilisation d'un intervalle de garde.

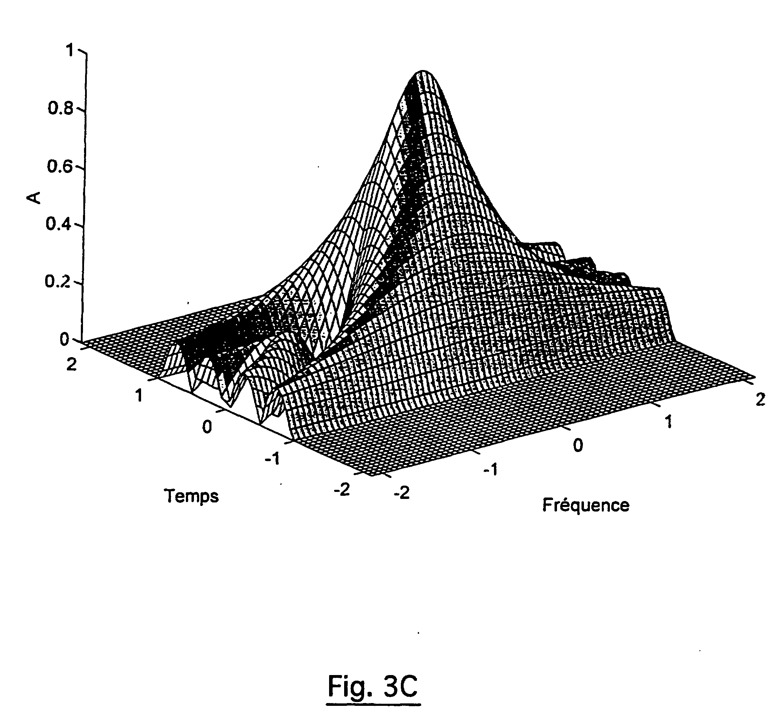

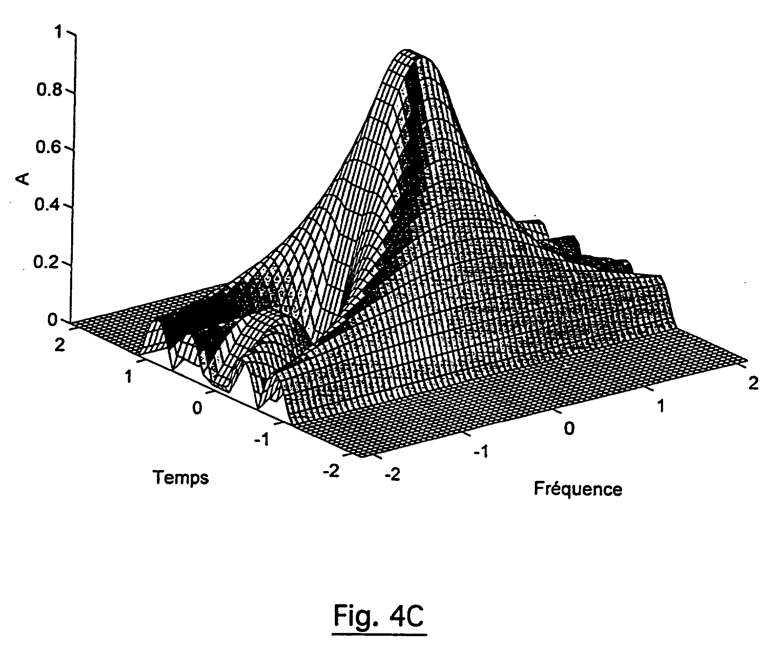

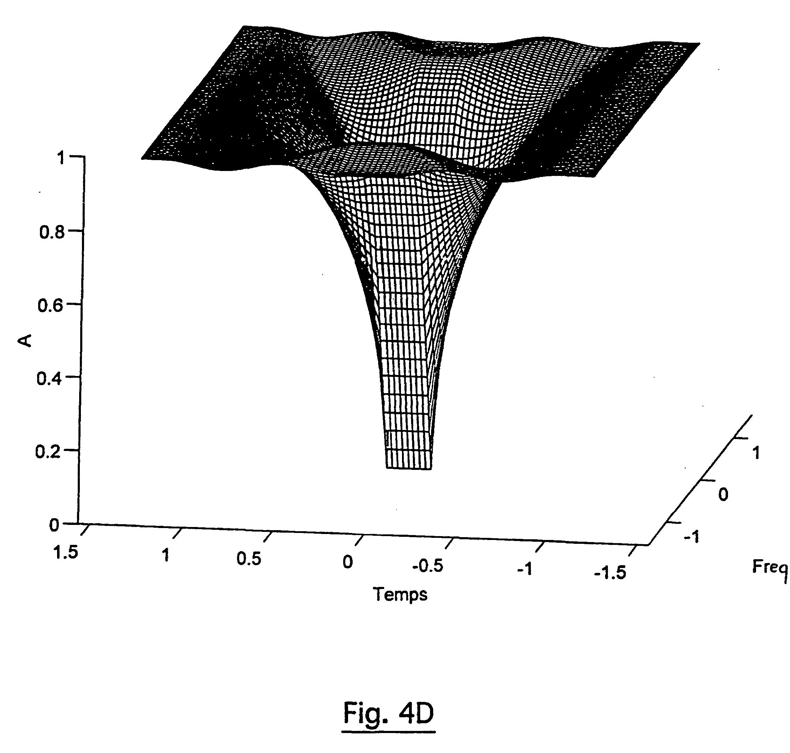

Les figures 4C et 4D concernent l'OFDM/QAM avec un intervalle de garde (les fonction prototype et transformée de Fourier sont identiques à celles de l'OFDM/QAM illustrées en figures 3A et 3C. L'utilisation d'un intervalle de garde crée une zone plate au niveau de la fonction d'ambiguïté. En fait, on devrait plutôt parler dans ce cas de cross-ambiguïté. On retrouve évidemment cette partie plate au niveau de la fonction d'intersymbole, ce qui donne une immunité aux erreurs temporelles. Les figures représentent le cas d'un intervalle de garde 0,25 τ₀.

Au niveau des erreurs fréquentielles, les propriétés sont les mêmes que celles de l'OFDM standard.

Le coût de l'intervalle de garde est admissible lorsqu'on s'intéresse à des modulations à faible efficacité spectrale. Il devient par contre rédhibitoire si l'on cherche une efficacité spectrale élevée : prenons par exemple un intervalle de garde égal au quart du symbole utile. Dans ces conditions, il faut pour atteindre une efficacité nette de 4 bits/s/Hertz un sytème de modulation et de codage ayant une efficacité brute de 5 bits/s/Hertz, soit une perte de 3 dB par rapport à la capacité limite de Shannon. Encore faut-il ajouter à cette perte la perte supplémentaire de 1 dB due à la puissance "inutilement" émise dans l'intervalle de garde. Au total, ce sont donc 4 dB qui sont perdus par rapport à l'optimum.

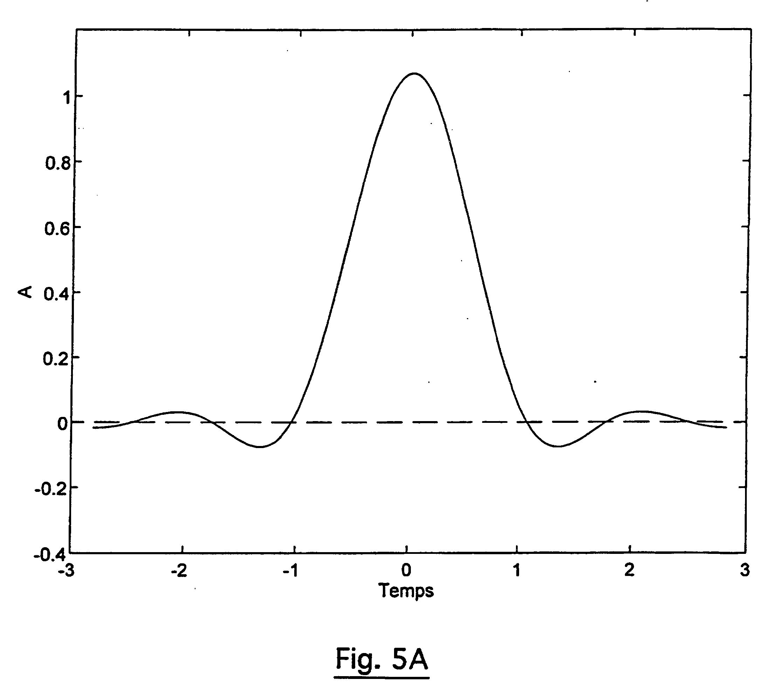

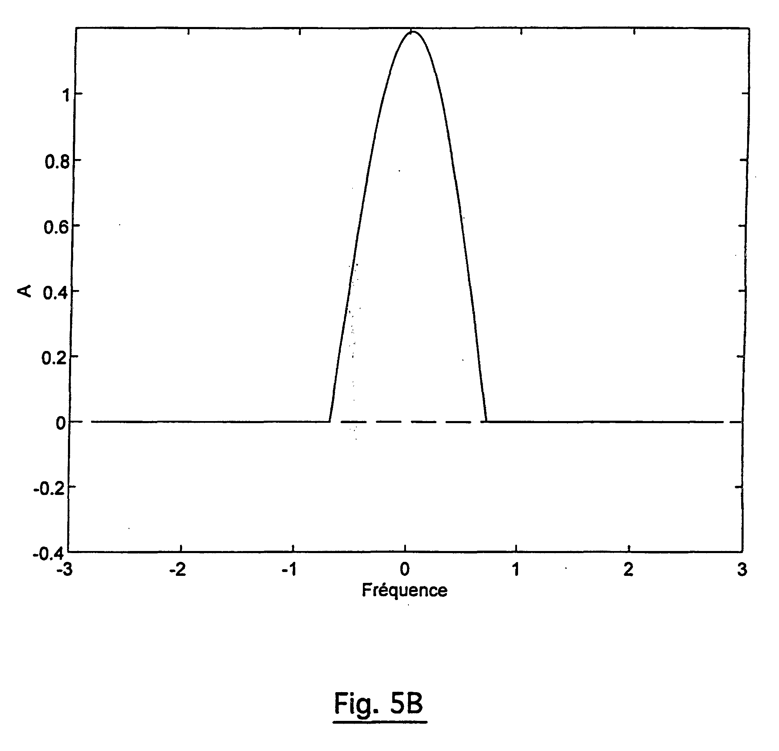

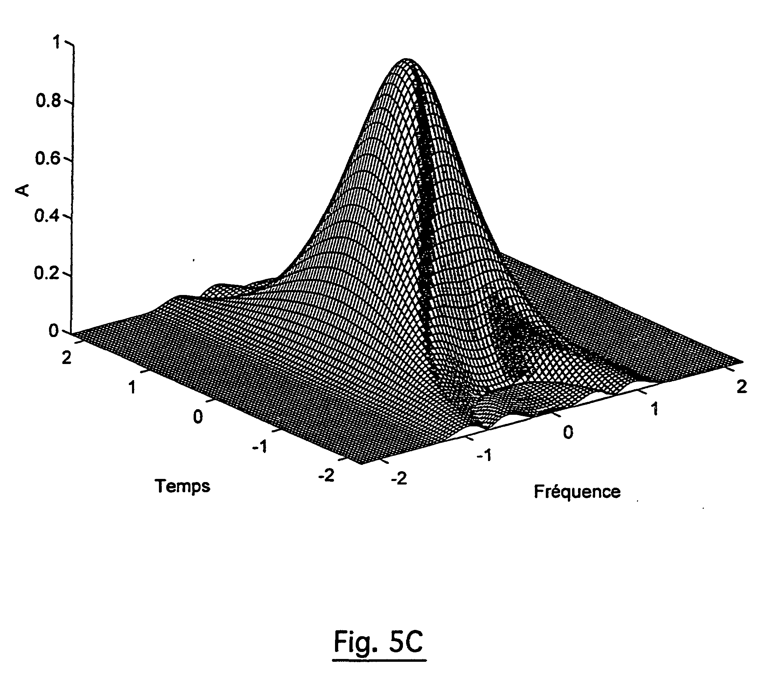

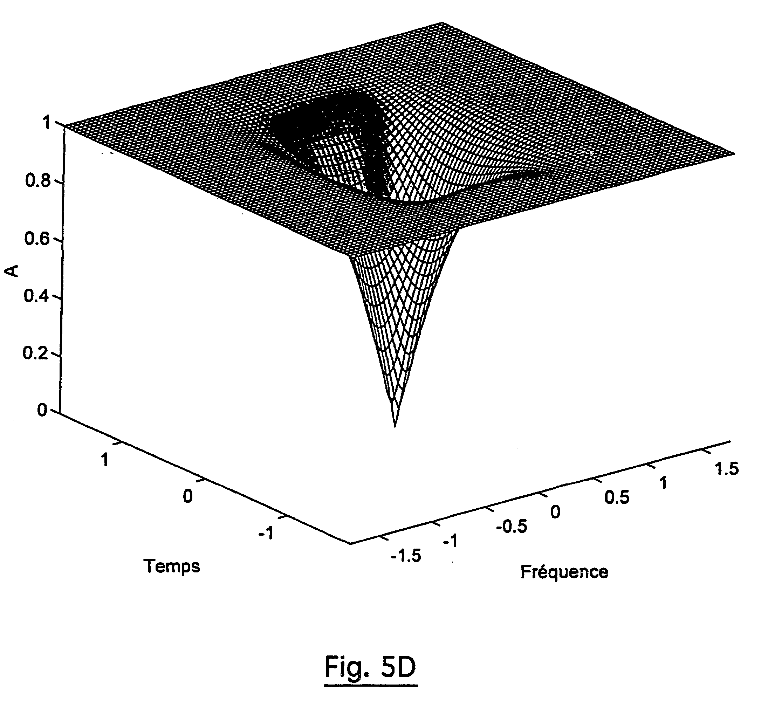

Les figures 5A à 5D présentent le cas de l'OFDM/OQAM.

La réponse temporelle de l'OFDM/OQAM présente une meilleure allure que celle de l'OFDM/QAM. Néanmoins la décroissance temporelle n'est qu'en 1/*t*². La fonction d'ambiguïté s'annule sur un réseau de densité 1/2. La sensibilité aux erreurs en fréquence est supérieure à celle aux erreurs temporelles. Le paramètre ξ vaut 0.8765.

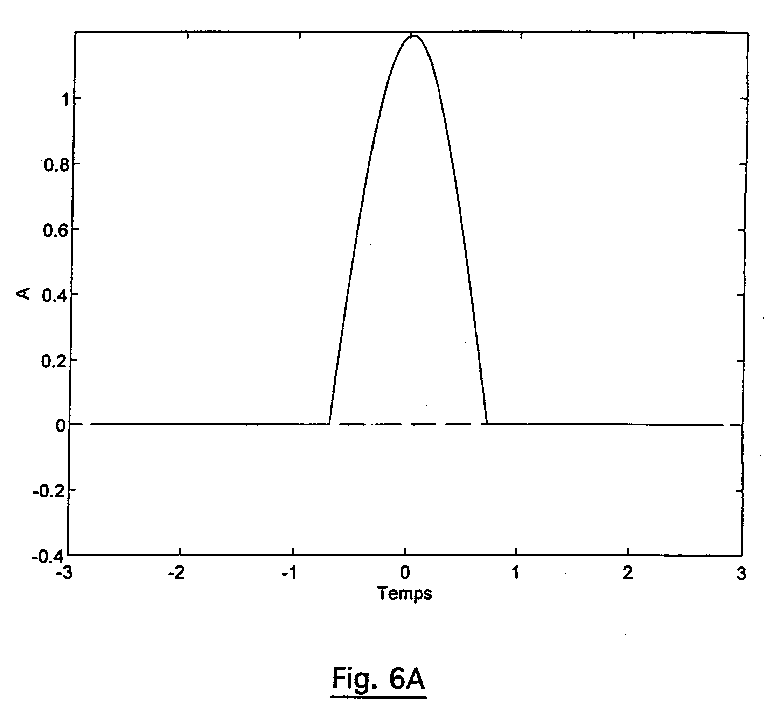

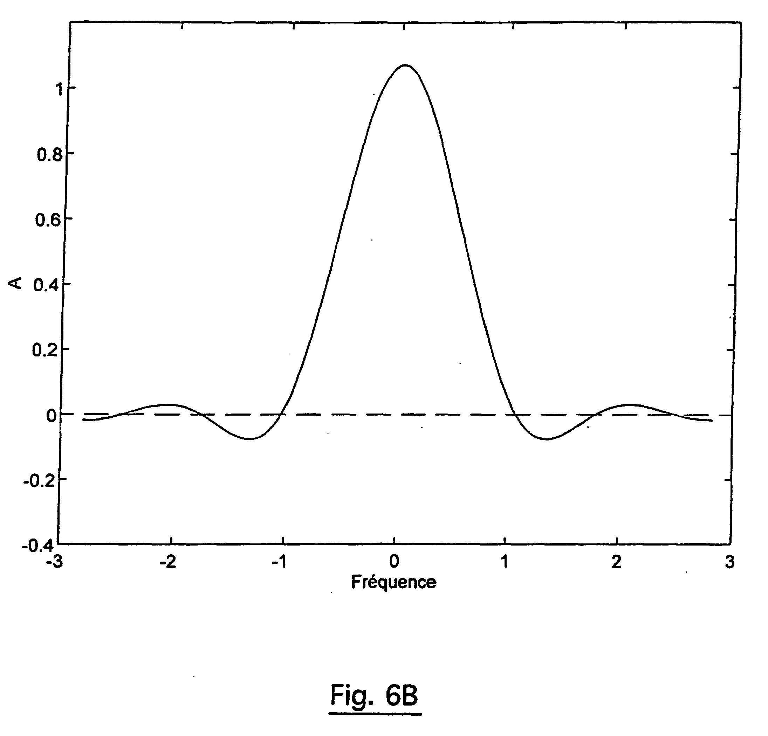

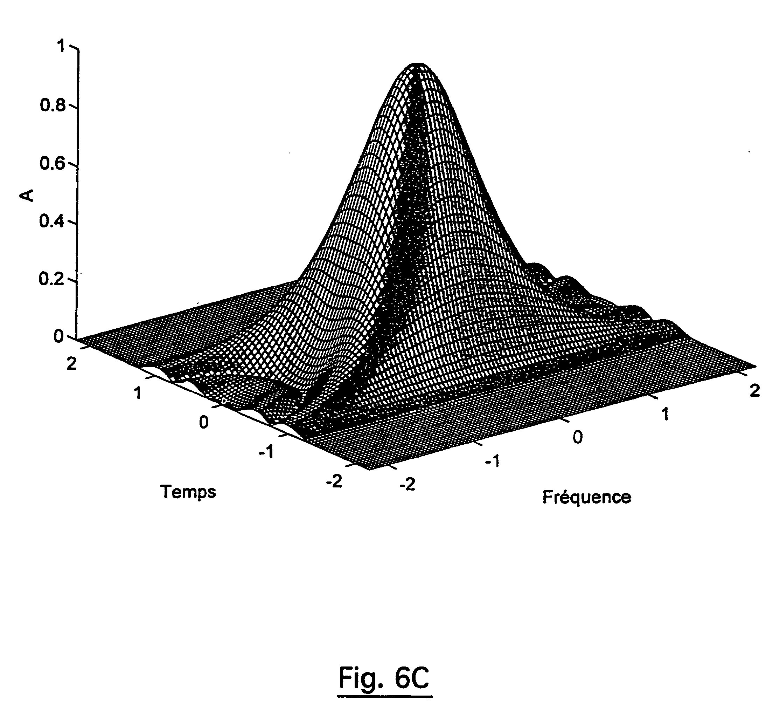

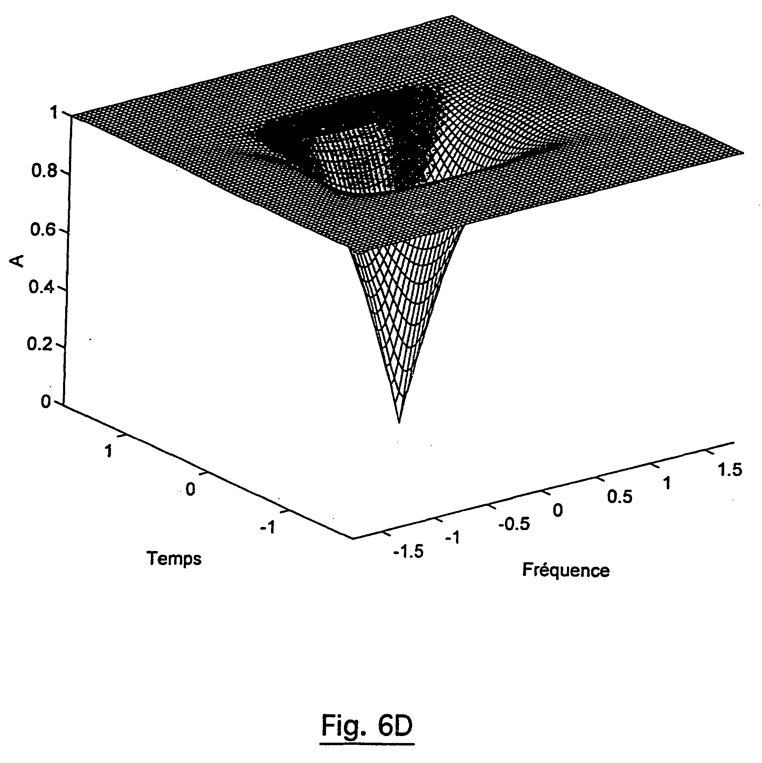

Les figures 6A à 6D concernent le premier mode de réalisation de l'invention, l'OFDM/MSK. On vérifie qu'elle présente des propriétés strictement identiques à celles de l'OQAM en inversant les échelles temporelles et fréquentielles. Le paramètre ξ est inchangé.

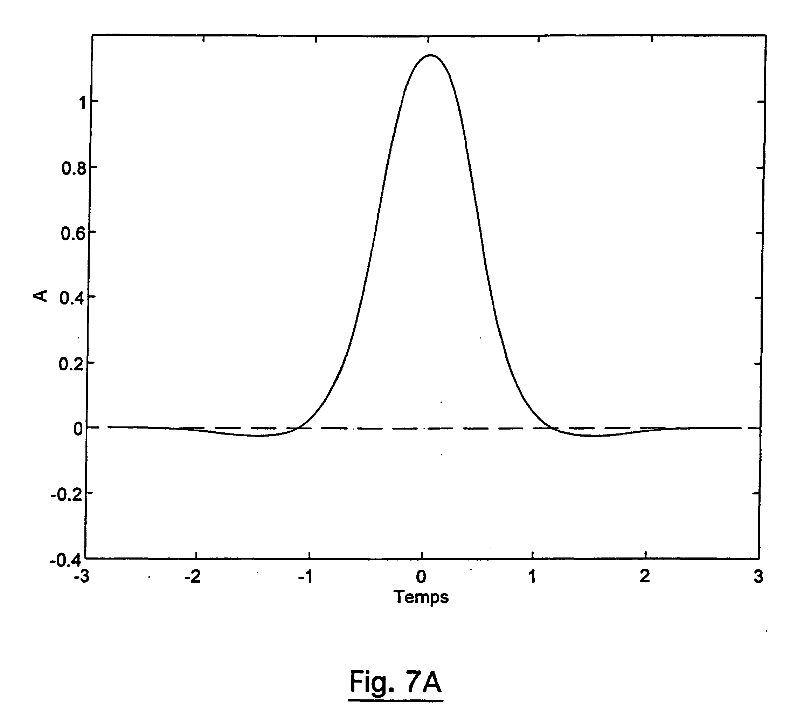

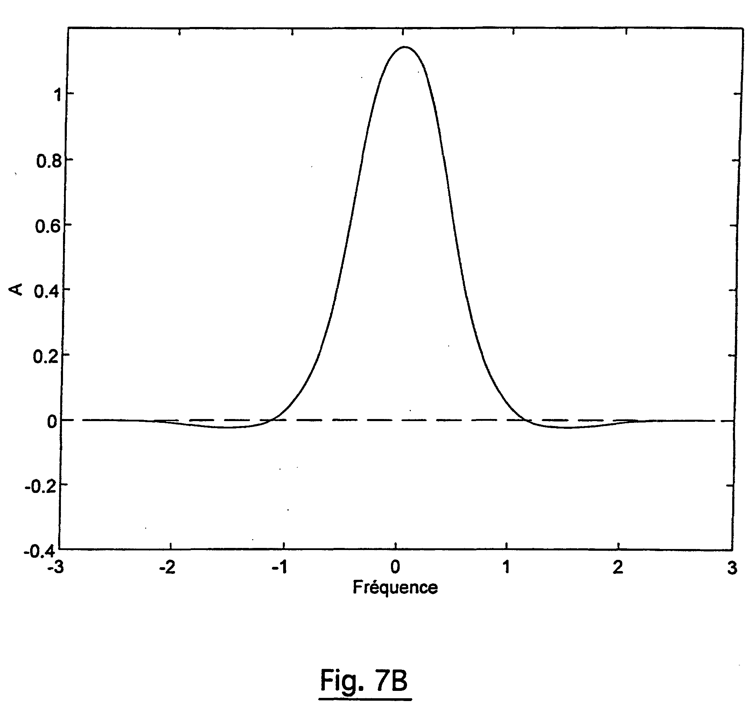

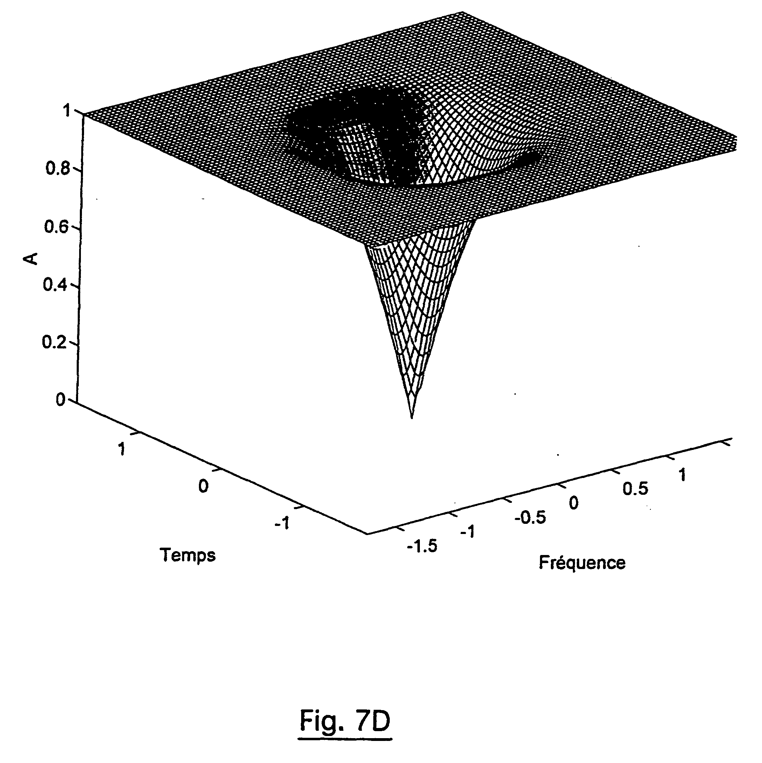

Enfin, les figures 7A à 7D présentent la modulation OFDM/IOTA. Celle-ci présente une décroissance rapide (au sens mathématique du terme) en temps et en fréquence, ce qui permet d'envisager l'égalisation dans les meilleurs conditions possibles. Elle présente par ailleurs une symétrie parfaite par rapport à ces deux axes. Sa fonction d'intersymbole est quasiment idéale. D'une manière générale son comportement se rapproche de celui de la gaussienne. Le paramètre ξ vaut 0.9769.

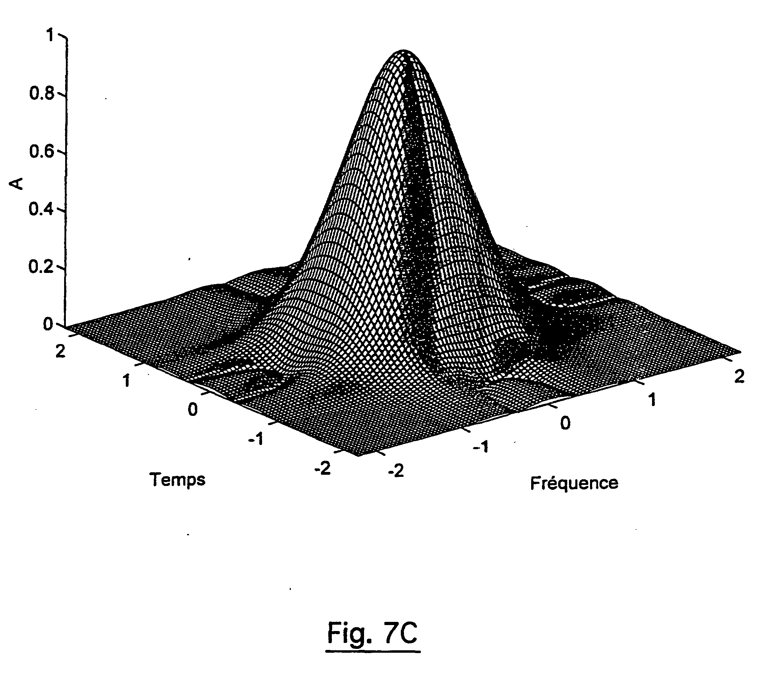

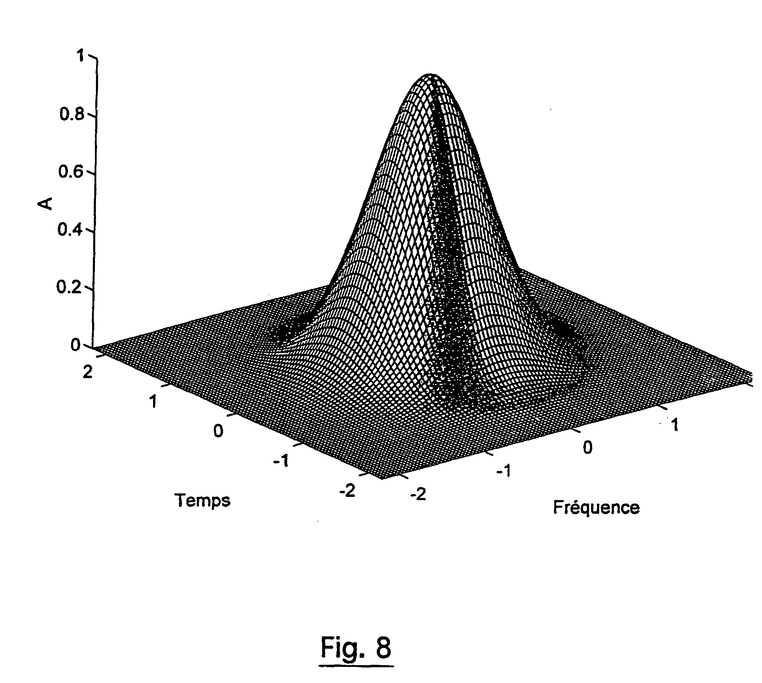

On peut comparer la fonction d'ambiguïté de la fonction 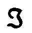 (figure 7C) à celle d'une gaussienne, telle qu'illustrée en figure 8. L'allure générale de ces deux fonctions est très similaire au niveau du sommet. Elles diffèrent par contre à la base.

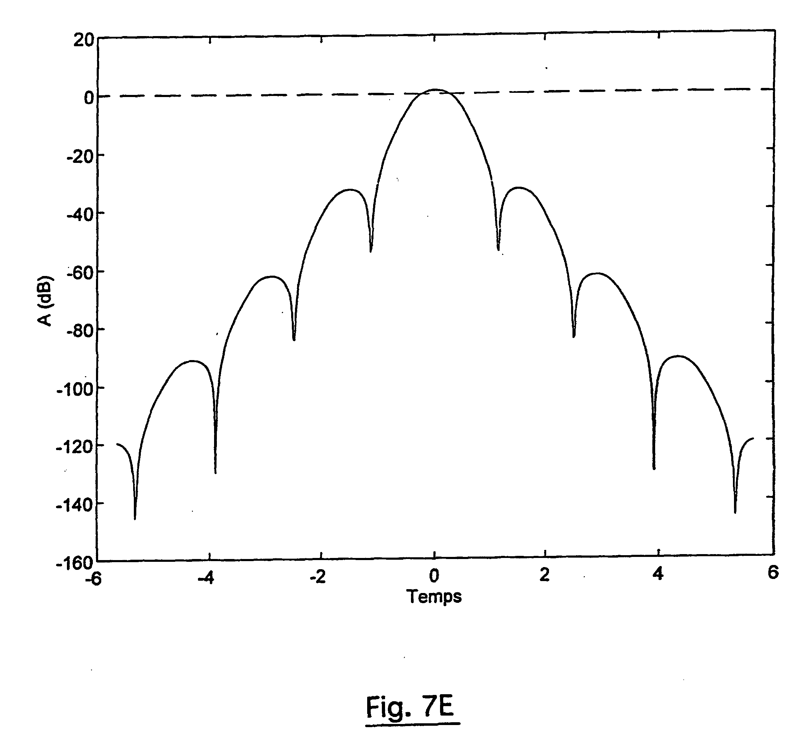

La figure 7E montre en échelle logarithmique la décroissance en temps du signal IOTA. On observe que l'amplitude du signal décroît linéairement en échelle logarithmique (en temps et en fréquence, bien sûr, puisque les deux aspects sont identiques), soit de façon exponentielle en échelle linéaire. Cette propriété permet donc dans une réalisation pratique de tronquer la forme d'onde et de limiter ainsi la complexité du récepteur.

### 5.6. Principe d'un émetteur

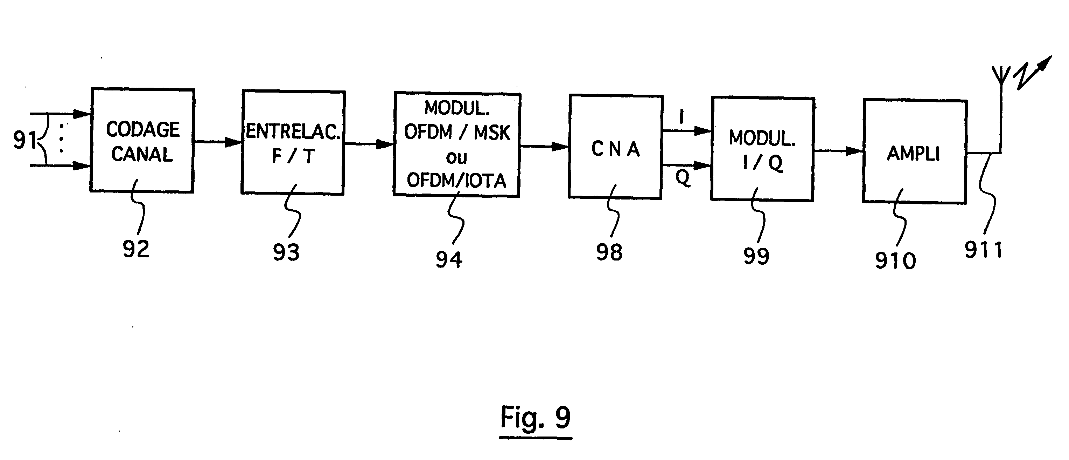

La figure 9 présente un synoptique simplifié d'un émetteur d'un signal selon l'invention. Le procédé d'émission s'en déduit directement.

On considère une source binaire à haut débit (typiquement quelques dizaines de Mégabitsls). Par source binaire, on entend une série d'éléments de données correspondant à un ou plusieurs signaux 91 source de tous types (sons, images, données) numériques ou analogiques échantillonnés. Ces données binaires sont soumises à un codage canal 92 binaire à binaire adapté à des canaux évanouissants. On pourra par exemple utiliser un code en treillis (Trellis Coded Modulation), concaténé éventuellement avec un code de Reed-Solomon. Plus précisément, si l'on souhaite une efficacité spectrale de 4 bits/Hertz, on peut utiliser un code de rendement 2/3 associé à une modulation 8AM, prenant 8 niveaux d'amplitude.

Ensuite, conformément au principe exposés dans le brevet FR-88 15216, on répartit (93) ces données codées dans l'espace temps-fréquence de façon à apporter la diversité nécessaire, et à décorréler l'évanouissement (fading) de Rayleigh affectant les symboles émis.

Plus généralement, on effectue un premier codage binaire à binaire, un entrelacement en temps et en fréquence et un codage binaire à coefficients, communément appelé « mapping ». Il est clair que l'entrelacement peut être indifféremment effectué avant ou après le mapping, selon les besoins et les codes utilisés.

A l'issue de cette opération de codage, on dispose des symboles réels à émettre a_{m,n}. Le principe de réalisation du modulateur 94 OFDM/MSK ou OFDM/IOTA est analogue à celui d'un émetteur OFDM/OQAM. Seule la forme d'onde prototype diffère. On pourra se référer à [15] pour une description détaillée du système de modulation. Pour construire le signal à émettre, on regroupe les symboles de même rang n, et l'on calcule:

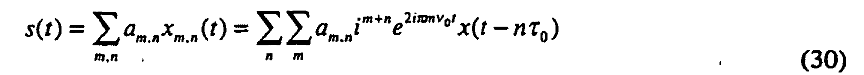

Cette opération peut être avantageusement réalisée sous forme numérique par une transformée de Fourier rapide (FFT) portant sur tous les symboles de même rang n, suivi d'une multiplication de la forme d'onde résultante par la fonction prototype IOTA, et enfin d'une addition des symboles de rangs différents (sommation selon l'indice n).

Le signal complexe ainsi généré est alors converti sous forme analogique 98, puis transposé à la fréquence finale par un modulateur 99 à deux voies en quadrature (modulateur I&Q), et enfin amplifié 910 avant d'être émis 911.

### 5.7 Principe d'un récepteur

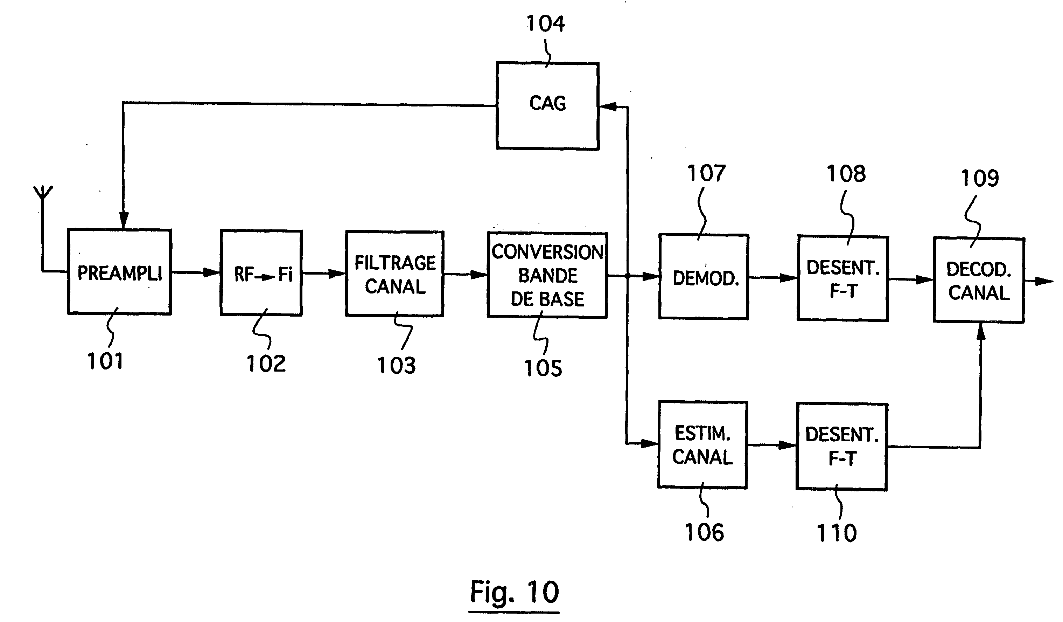

La figure 10 illustre de façon schématique un récepteur d'un signal selon l'invention (ainsi que le procédé de réception correspondant).

Le récepteur OFDM/MSK ou OFDM/IOTA est sensiblement analogue à celui adapté à la modulation OFDM/OQAM. Les étages d'entrée sont conventionnels. Le signal est préamplifié 101, puis converti en fréquence intermédiaire 102 afin de réaliser le filtrage canal 103. Le signal en fréquence intermédiaire est ensuite converti en bande de base sur deux voies en quadrature 105. En outre, on réalise les fonctions de correction automatique de gain (CAG) 104, qui contrôle la préamplification 101.

Une autre solution consiste à transposer le signal en fréquence intermédiaire sur une fréquence porteuse basse, de façon à échantillonner le signal sur une seule voie, la représentation complexe étant alors obtenue par filtrage numérique. Alternativement, le signal RF peut être transposé directement en bande de base (conversion directe), le filtrage canal étant alors réalisé sur chacune des deux voies I&Q. Dans tous les cas, on peut se ramener à une représentation discrète du signal de l'enveloppe complexe correspondant au signal reçu.

Afin de détailler le traitement numérique en bande de base, nous considérerons une modulation de type multiporteuse caractérisée par l'équation de l'enveloppe complexe du signal émis:

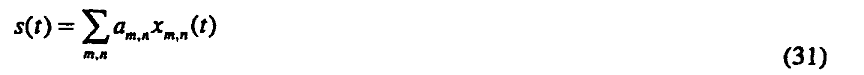

Soit un canal de transmission caractérisé par sa fonction de transfert variable T(f,t) (voir annexe 2). L'enveloppe complexe du signal reçu r(t) s'écrit:$\text{r} \text{(} \text{t} \text{) = ∫S(} \text{f} \text{)} \text{T} \text{(} \text{f,t} \text{)} {\text{e}}^{\text{2} \text{i} \text{π} \text{ft}} \text{df}$

Le démodulateur estime (106) la fonction de transfert T(f,t) par des moyens classiques, qui peuvent par exemple utiliser un réseau de référence de porteuses explicites selon le brevet FR-90 01491. Pour démoduler le signal proprement dit (107), on assimile localement le canal à un canal multiplicatif caractérisé par une amplitude et une phase correspondant à la valeur de T(f,t) pour l'instant et la fréquence considérée. Pour estimer a_{m,n}(t), le signal reçu est donc assimilé au signal:

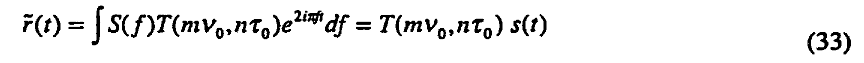

On posera:$\text{T} \text{(} {\text{mν}}_{\text{0}} {\text{,nτ}}_{\text{0}} {\text{) = ρ}}_{\text{m,n}} \text{e} {\text{}}^{{\text{iθ}}_{\text{m,n}}}$

Le démodulateur effectue donc le traitement suivant:

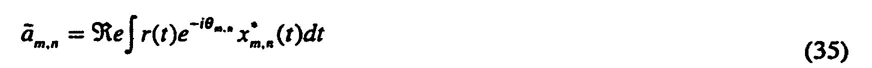

Dans le cas d'un canal stationnaire de fonction de transfert ρe^{iθ}, on retrouve évidemment:${\text{ã}}_{\text{m,n}} \text{= ρ} {\text{a}}_{\text{m,n}}$

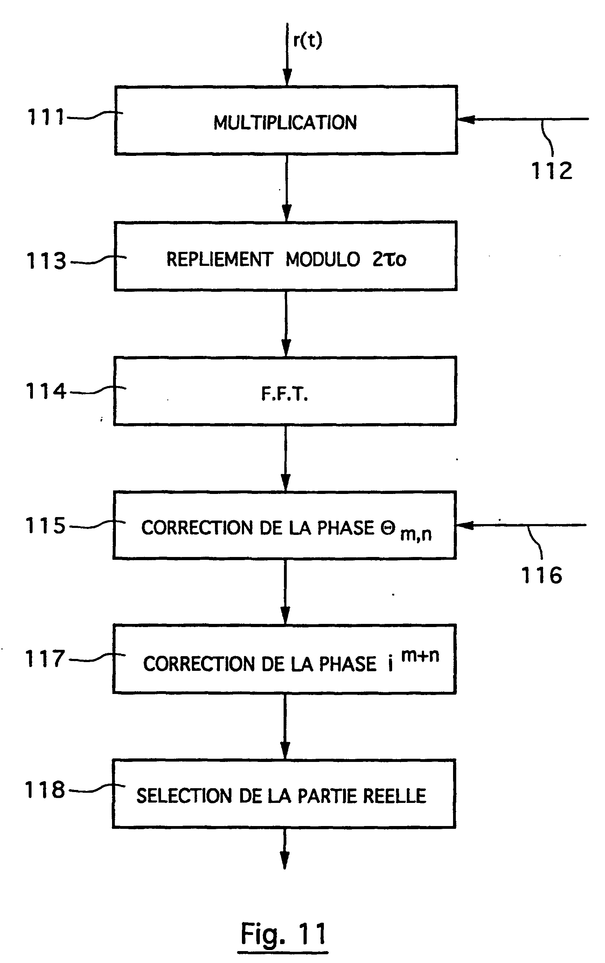

En pratique, le traitement 107 est effectué sous forme numérique, selon le procédé illustré en figure 11. Le récepteur fonctionne de façon analogue à un récepteur OFDM/OQAM [13-16]. Il effectue les traitements suivants:
- multiplication 111 dudit signal reçu r(t) par la fonction prototype x(t) 112;
- « repliement » 113 de la forme d'onde filtrée module 2τ₀ ;
- application 114 d'une transformée de Fourier (FFT) ;
- correction 115 de la phase θ_{m,n} en fonction de l'estimation du canal 116, comprenant par exemple une estimation ρ_{m,n} de la réponse en amplitude et une estimation θ_{m,n} de la réponse en phase du canal de transmission;
- correction 117 de la phase correspondant au terme i^{m+n}, les éléments de données étant alternativement en phase et en quadrature ;
- sélection 118 de la partie réelle du coeeficient obtenu *ã*_{*m,n*} correspondant au coefficient a_{m,n} émis pondéré par la réponse en amplitude ρ_{m,n} du canal de transmission.

Cet algorithme permet donc de calculer globalement tous les coefficients d'un indice n donné. L'ordre de grandeur de la complexité correspondante est approximativement le double de celle de l'algorithme utilisé pour l'OFDM/QAM.

Les coefficients ainsi obtenus sont ensuite désentrelacés 108, symétriquement à l'entrelacement mis en oeuvre à l'émission, puis décodés 109, avantageusement selon une technique de décodage à décision douce, mettant par exemple en oeuvre un algorithme du type de l'algorithme de Viterbi. Si le décodage de canal tient compte de l'estimation de la réponse de l'amplitude du canal ρ_{m,n}, les valeurs correspondantes sont également désentrelacées 110. Par ailleurs, le désentrelacement est bien sûr effectué avant ou après le mapping, selon le moment ou l'entrelacement a été mis en oeuvre à l'émission.

### ANNEXE 1 : REFERENCES

[1] M.L. Doeltz, E.T. Heald and D.L. Martin, « Binary data transmission techniques for linear systems »
   Proceedings of the IRE,
   pp. 656-661, May 1957.
[2] R.R. Mosier, « A data transmission system using pulse phase modulation »
   IRE Conv. Rec. Ist Nat'l Conv Military Electronics
   (Washington, D.C., June 17-19, 1957) pp. 233-238.
[3] G.A. Franco and G. Lachs, «An orthogonal coding technique for communnications »
   1961 IRE Internat'1 Conv. Rec.,
   vol. 9, pp. 126-133.
[4] H.F. Harmuth, « On the transmission of information by orthogonal time functions » AIEE Trans. (Communications and Electronics)
   vol. 79, pp. 248-255, July 1960.
[5] S.B. Weinstein and Paul M. Ebert, « Data transmission by frequency-division multiplexing using the discrete Fourier transform »
   IEEE Trans. Commun.,
   vol. COM-19, pp. 628-634, Oct. 1971.
[6] L.J. Cimini, « Analysis and simulation of a digital mobile channel using orthogonal frequency division multiplexing, »
   IEEE Trans. Commun.,
   vol. COM-33, pp. 665-675, July 1985.
[7] E.F. Casas and C. Leung, « OFDM for data communication over mobile radio FM channels - Part I : Analysis and experimental results, »
   IEEE Trans. Commun.,
   vol. 39, pp. 783-793, May 1991.
[8] E.F. Casas and C. Leung, « OFDM for data communication over mobile radio FM channels - Part II : Performance improvement, »
   IEEE Trans. Commun.,
   vol. 40, pp. 680-683, April 1992.
[9] I. Daubechies, « The wavelet transform, time-frequency localization and signal analysis,»
   IEEE Trans. Inform. Theory,
   vol. IT-36, pp. 961-1005, Sept. 1990.
[10] H.E. Jensen, T. Hoholdt, and J. Justesen, « Double series représentation of bounded signals, »
   IEEE Trans. Inform. Theory,
   vol. IT-34, pp. 613-624, July 1988.
[11] ] R.W. Chang, « Synthesis of band-limited orthogonal signals for multi-channel data transmission, »
   Bell Syst. tech. J.,
   vol. 45, pp. 1775-1796, Dec. 1966.
[12] B.R. Saltzberg, « Performance of an efficient parallel data transmission system, » IEEE Trans. Commun. Technol.,
   vol. COM-15, pp. 805-811, Dec. 1967.
[13] R.W. Chang, « A theorical study of performance of an orthogonal multiplexing data transmission scheme, »
   IEEE Trans. Commun. Technol.,
   vol. COM-16, pp. 529-540, Aug. 1968.
[14] B. Hirosaki, « An analysis of automatic equalizers for orthogonally multiplexed QAM systems, »
   IEEE Trans. Commun.,
   vol. COM-28, pp. 73-83, Jan. 1980.
[15] B. Hirosaki, « An orthogonally multiplexed QAM system using the discrète Fourier transform, »
   IEEE Trans. Commun.,
   vol. COM-29, pp. 982-989, July. 1981.
[16] B. Hirosaki, « A maximum likehood receiver for an orthogonally mulitplexed QAM system, »
   IEEE Journal on Selected Areas in Commun.,
   vol. SAC-22, pp. 757-764, Sept 1984.
[17] B. Hirosaki, S. Hasegawa, and A. Sabato, « Advanced group-band modem using orthogonally multiplexed QAM technique, »
   IEEE Trans. Commun.,
   vol. COM-34, pp. 587-592, June. 1986.
[18] John A.C. Bingham, «Multicarrier modulation for data transmission : An idea whose time has come, »
   IEEE Communications Magazine,
   pp. 5-14, May 1990.
[19] P.M. WOODWARD, « Probability and information theory with application to Radar, »
   Pergamon Press,
   London 1953.
[20] F. Amoroso and J. A. Kivett, « Simplified MSK signalling technique, »
   IEEE Trans. Commun.,
   vol. COM-25, pp. 433-441, April 1977.
[21] P. A. Bello, « Characterization of randomly time-variant linear channels, »
   *IEEE Trans. Commun. Systems,*
   pp. 360-393, Dec. 1964.
[22] P.M. WOODWARD, « Probability and information theory with application to Radar ,»
   *Pergamon Press,*
   London 1953.
[23] M. ALARD et R. LASSALLE « Principes de modulation et de codage canal en radiodiffusion numérique vers les mobiles »
*Revue de l'U.E.R,*
n° 224, août 1987, pp. 168-190.

### ANNEXE 2

### 1. Modélisation du canal

### 1.1. Modèle général

On peut considérer un canal dispersif comme un système linéaire ayant une réponse impulsionnelle variable dans le temps. Il existe deux façons de définir cette réponse impulsionnelle. On s'inspirera largement des conventions proposées dans [21]:
- la réponse impulsionnelle à l'entrée (Input Delay Spread Function) g(t, τ) définie par:$\text{r} \text{(} \text{t} \text{) = ∫} \text{s} \text{(} \text{t} \text{-τ)} \text{g} \text{(} \text{t} \text{,τ)} \text{d} \text{τ}$
où s(t) et r(t) représentent respectivement les signaux émis et reçus
- la réponse impulsionnelle en sortie (Output Delay Spread Function) h(t,τ) définie par:$\text{r} \text{(} \text{t} \text{) = ∫} \text{s} \text{(} \text{t} \text{- τ)} \text{h} \text{(} \text{t} \text{- τ, τ)} \text{d} \text{τ}$

On a évidemment *h*(*t,τ*) = *g(t* + τ,τ)- h(t,τ) représente la réponse impulsionnelle du canal à l'instant t. Munis de ces conventions, nous pouvons définir les fonctions caractéristiques suivantes:
- la fonction d'étalement délai-Doppler U(T,v) (Delay-Doppler Spread Function) caractérisée par:$\text{g} \text{(} \text{t} \text{,τ) = ∫} \text{U} \text{(τ, ν)} {\text{e}}^{\text{i2πνt}} \text{d} \text{ν}$ avec$\text{r} \text{(} \text{t} \text{) =∫∫} \text{U} \text{(τ, ν)} \text{s} \text{(} \text{t} \text{- τ)} {\text{e}}^{\text{i2πνt}} \text{dνdτ}$
- la fonction d'étalement Doppler-délai V(ν,τ) (Doppler-Delay Spread Function) caractérisée par:$\text{h(t,τ)} \text{=} {\text{∫V(ν,τ)e}}^{\text{-i2πνt}} \text{dν}$ avec$\text{r} \text{(} \text{t} \text{) = ∫∫ V(ν, τ)} \text{s} \text{(} \text{t} \text{- τ)} {\text{e}}^{\text{i2πν(t-τ)}} \text{dνd} \text{τ}$

On a tout simplement:$\text{V} \text{(ν,τ) =} {\text{e}}^{\text{i2πνt}} \text{U(τ,ν)}$
- la fonction de transfert variable (Time-Variant Transfert Function) T(f,t) caractérisée par:$\text{T} \text{(} \text{f} \text{,} \text{t} \text{) = ∫g(} \text{t} \text{,τ)} {\text{e}}^{\text{-i2π} \text{ft}} \text{d} \text{τ}$ avec$\text{r} \text{(} \text{t} \text{) = ∫} \text{S} \text{(} \text{f} \text{)} \text{T} \text{(} \text{f,t} \text{)} {\text{e}}^{\text{i2πft}} \text{df}$

On retrouve donc la même équation que dans le cas d'un canal stationnaire, la différence étant simplement que la fonction de transfert devient variable dans le temps. Cette fonction de transfert T(f,t) est la transformée de Fourier bidimensionnelle de U(τ,ν), soit:$\text{T} \text{(} \text{f,t} \text{) = ∫∫} \text{U} \text{(τ,ν)} {\text{e}}^{\text{-} \text{i} \text{2πτ} \text{f}} {\text{e}}^{\text{i} \text{2πν} \text{t}} \text{d} \text{τ} \text{d} \text{ν}$

Dans tous les cas, nous considérerons que U(τ,ν) est à support borné, ce qui permet de représenter la fonction de transfert T(f,t) par un réseau de valeurs discrètes en vertu du théorème d'échantillonnage.

### 1.2. Le modèle délai-Doppler statique

Le modèle délai-Doppler est défini par l'équation:$\text{r} \text{(} \text{t} \text{) = ∫∫} \text{U} \text{(τ, ν)} \text{s} \text{(} \text{t} \text{- τ)} {\text{e}}^{\text{i} \text{2πv} \text{t}} \text{dτdν}$

Cette équation fait apparaître le canal comme une somme de canaux élémentaires caractérisés par une amplitude, une phase, un offset temporel et un offset fréquentiel. Aussi est-il légitime de s'intéresser au comportement des différentes modulations en présence de ce type de canal, que nous baptiseront délai-Doppler statique.

L'équation du canal s'écrit alors sous la forme simplifiée suivante:$\text{r} \text{(} \text{t} \text{) =} {\text{Ae}}^{\text{i} \text{θ}} \text{s} \text{(} \text{t} \text{- τ)} {\text{e}}^{\text{i} \text{2π} \text{vt}}$

### 2. Performances de l'OFDM dans les canaux non-stationnaires

### 2.1. Cas général

Considérons une modulation multiporteuse OFDM de type quelconque (OFDM/QAM, OFDM/OQAM ou OFDM/IOTA) caractérisée par l'équation générique: 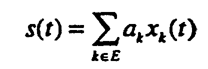 aₖ étant des variables réelles, E étant un réseau bidimensionnel de densité 2 dans l'espace temps-fréquence, les fonctions xₖ (t) étant des translatées en temps et en fréquence d'une même fonction prototype x(t), et qui constituent une base hilbertienne de L²(R).${\text{x}}_{\text{k}} \text{(} \text{t} \text{) =} \text{e} {\text{}}^{{\text{iϕ}}_{\text{k}}} \text{x} \text{(} \text{t} \text{-} {\text{τ}}_{\text{k}} \text{)} \text{e} {\text{}}^{{\text{2iπν}}_{\text{k}} \text{t}} \text{,} \text{k ∈ E}$

On notera qu'aucune hypothèse n'est faite sur la structure du réseau E. Dans le cas particulier de l'OFDM/QAM, ce réseau se décompose en deux sous-réseaux co-localisés avec des phases en quadrature.

L'opération de démodulation s'écrit: 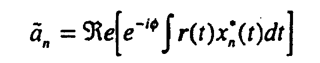 φ étant une phase estimée par le démodulateur et r(t) l'enveloppe complexe du signal reçu. On peut donc écrire: 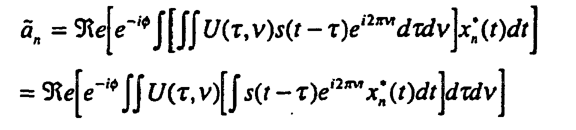 Or.

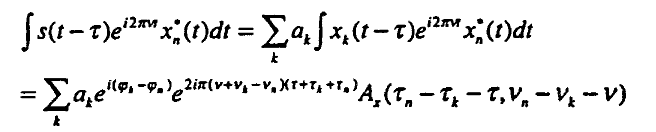

On en déduit que:

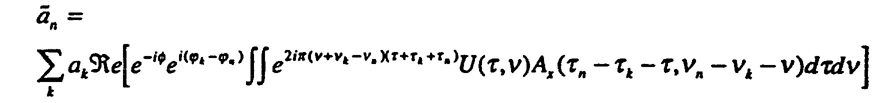

La valeur optimale de φ est celle qui maximise le coefficient aₙ, soit:$\text{φ} \text{=} \text{Arg} \text{∫∫} {\text{e}}^{\text{2iπνt}} \text{U} \text{(} \text{τ,ν} \text{)} {\text{A}}_{\text{x}} \text{(} \text{-τ,-ν} \text{)} \text{dτdν}$

Bien que générales, les équations ci-dessus ne sont guère manipulables. Elles montrent cependant que le signal utile et l'intersymbole apparaissent comme des intégrations de la fonction d'ambiguïté pondérée par la fonction d'étalement délai-Doppler.

### 2.2. Cas du canal statique

Si l'on s'intéresse à un canal de type délai-Doppler statique, caractérisé par une phase θ, un retard τ et un offset ν (on normalisera à 1 l'amplitude A), on effectue la démodulation de manière similaire en introduisant dans l'estimateur un paramètre de phase φ. Le résultat de cette opération s'écrit:

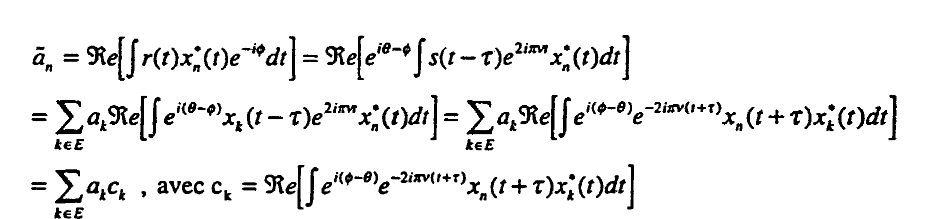

Le signal démodulé s'écrit donc finalement:

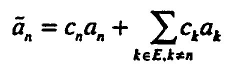

Le deuxième terme représente l'interférence entre symboles (IES). Si l'on considère les données aₖ comme des variables aléatoires indépendantes de variance σ², la variance I de l'IES s'écrit:

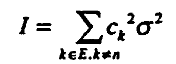

Or les coefficients cₖ sont les coefficients de la décomposition de la fonction *e*^{*i(φ-θ)*}*e*^{*-2iπν(t+τ)*}*x*_{*n*}*(t* + τ), de norme unité, sur la base hilbertienne des fonctions xₖ(t). On a donc:

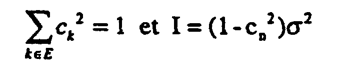

En d'autres termes, la variance du signal reçu est constante et se répartit entre le signal "utile" *c*_{*n*}*a*_{*n*} et l'IES, de variance I = (1 - cₙ²)σ². Le calcul du coefficient cₙ donne:

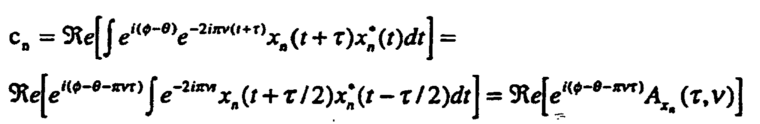

Or la fonction d'ambiguïté de xₙ s'écrit:$\text{A} {\text{}}_{{\text{x}}_{\text{n}}} \text{(τ,ν) =} {\text{e}}^{\text{2i}} {\text{}}^{{\text{π(ν}}_{\text{n}} {\text{τ-τ}}_{\text{n}} \text{ν)}} {\text{A}}_{\text{x}} \text{(τ,ν)}$

Finalement, on peut écrire:

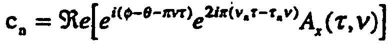

On considérera que la phase de démodulation φ s'écrit sous la forme φₒₚₜ+Δφ, où φₒₚₜ est la phase de démodulation qui minimise l'IES, c'est-à-dire qui maximise cₙ , soit:${\text{φ}}_{\text{opt}} {\text{=θ+πντ+2π(τ}}_{\text{n}} {\text{ν-ν}}_{\text{n}} \text{τ)}$

Alors, la variance de l'IES s'écrit simplement:

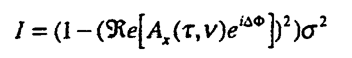

Lorsque la fonction prototype est paire, (ce qui correspond au cas de la méthode de construction de bases hilbertiennes décrite dans le texte principal), la fonction d'ambiguïté est réelle, et on a donc:$\text{I} \text{= (1 -} {\text{A}}_{\text{x}} {\text{}}^{\text{2}} \text{(τ,ν)} {\text{cos}}^{\text{2}} \text{Δφ} {\text{))σ}}^{\text{2}}$

Ce résultat est tout à fait remarquable, puisqu'il démontre que la sensibilité au délai et au Doppler de toute modulation multiporteuse ne dépend que de la fonction d'ambiguïté de sa fonction prototype. On appellera par la suite fonction d'intersymbole (par abus de langage, pour fonction d'interférence entre symboles) la fonction *Is*(τ, ν) = $\sqrt{\text{1-} {\text{A}}_{\text{x}} {\text{}}^{\text{2}} \text{(τ,ν)}}$ dans le cas général, qui représente la valeur quadratique moyenne de l'intersymbole normalisée par la valeur quadratique moyenne des données dans le cas d'une estimation de phase optimale.

### 3. Analyse comparative des différents types d'OFDM

### 3.1. Limites théoriques

Nous nous intéressons ci-après aux propriétés de la fonction d'intersymbole. On constate que la sensibilité d'une modulation multiporteuse est directement liée au comportement de la fonction d'ambiguïté de la fonction prototype correspondante au voisinage de (0,0). Le problème posé est tout à fait analogue aux problèmes d'incertitude rencontrés dans le domaine radar, et on pourra se référer à la littérature abondante sur le sujet (voir par exemple [22]). Sans perte de généralité, on peut choisir la fonction x(t), par une translation temporelle et fréquentielle adéquate, de telle sorte que ses moments d'ordre un soient nuls, soit:$\text{∫} \text{t} {\text{lx(t)|}}^{\text{2}} \text{dt} \text{= ∫} \text{f} \text{|} \text{X(f} {\text{)|}}^{\text{2}} \text{df} \text{= 0}$

Dans ces conditions, on vérifie aisément que les dérivées partielles du premier ordre s'annulent:$\frac{\text{∂} {\text{A}}_{\text{x}}}{\text{∂ν}} \text{(τ,ν) = -2} \text{i} \text{π∫} {\text{e}}^{\text{-2}} {\text{}}^{\text{iπνt}} \text{t x(t +τl2} \text{)} \text{x} \text{* (} \text{t} \text{-τ/2)} \text{dt} \text{⇒} \frac{\text{∂} {\text{A}}_{\text{x}}}{\text{∂ν}} \text{(0,0) = -2} \text{i} \text{π∫} \text{t} \text{|} \text{x} \text{(} \text{t} {\text{)|}}^{\text{2}} \text{dt} \text{= 0}$$\frac{\text{∂} {\text{A}}_{\text{x}}}{\text{∂τ}} \text{(τ,ν) = -} \text{2i} {\text{π∫e}}^{\text{-2iπ} \text{f} \text{τ}} \text{fX} \text{(} \text{f} \text{+ν/2)X*(} \text{f} \text{-ν/2)} \text{df} \text{⇒} \frac{\text{∂} {\text{A}}_{\text{x}}}{\text{∂τ}} \text{(0,0) =-2} \text{i} \text{π∫} \text{f} {\text{|X(f)|}}^{\text{2}} \text{df} \text{= 0}$

On peut caractériser le comportement de la fonction d'ambiguïté autour de (0,0) à partir des dérivées partielles de second ordre:

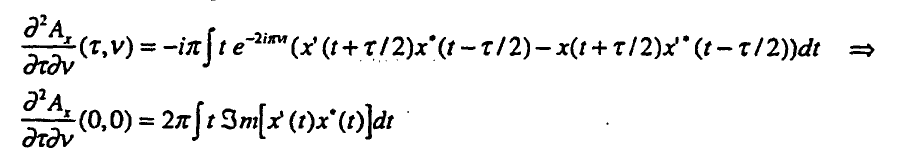

On posera $\frac{{\text{∂}}^{\text{2}} {\text{A}}_{\text{x}}}{\text{∂τ∂ν}}$ (0,0)=µ_{*x*}$\frac{{\text{∂}}^{\text{2}} {\text{A}}_{\text{x}}}{{\text{∂ν}}^{\text{2}}} {\text{(τ,ν)=-4π}}^{\text{2}} \text{∫} {\text{e}}^{\text{-2} \text{i} \text{πν} \text{t}} {\text{t}}^{\text{2}} \text{x(t+τ/2)x*(t-τ/2)} \text{dt} \text{⇒} \frac{{\text{∂}}^{\text{2}} {\text{A}}_{\text{x}}}{{\text{∂ν}}^{\text{2}}} {\text{(0,0) = -4π}}^{\text{2}} {\text{∫t}}^{\text{2}} \text{|x(} \text{t} {\text{)|}}^{\text{2}} \text{dt} {\text{= -4πΔt}}^{\text{2}}$$\frac{{\text{∂}}^{\text{2}} {\text{A}}_{\text{x}}}{{\text{∂τ}}^{\text{2}}} {\text{(τ,ν)=-4π}}^{\text{2}} \text{∫} {\text{e}}^{\text{-2iπ}} {\text{f}}^{\text{2}} \text{X(} \text{f} \text{+ν/2)X*(} \text{f} \text{+ν/2)} \text{df} \text{⇒} \frac{{\text{∂}}^{\text{2}} {\text{A}}_{\text{x}}}{{\text{∂τ}}^{\text{2}}} {\text{(0,0) = -4π}}^{\text{2}} \text{∫} {\text{f}}^{\text{2}} \text{|} \text{X} \text{(} \text{f} {\text{)|}}^{\text{2}} \text{df} {\text{= -4π}}^{\text{2}} \text{Δ} {\text{f}}^{\text{2}}$

Considérons le développement de Taylor-Young de la fonction d'ambiguïté en (0,0):${\text{A}}_{\text{x}} \text{(dτ,dν} {\text{) =1-2π}}^{\text{2}} \text{(Δ} {\text{t}}^{\text{2}} {\text{dν}}^{\text{2}} \text{+Δ} {\text{f}}^{\text{2}} \text{d} {\text{τ}}^{\text{2}} \text{)+µ} \text{d} \text{ν} \text{d} \text{τ+o(} \text{d} {\text{ν}}^{\text{2}} \text{+} \text{d} {\text{τ}}^{\text{2}} \text{)}$

On en déduit le développement de Taylor-Young de la variance de l'intersymbole 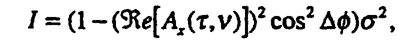 soit:$\text{I} \text{(} \text{dτ,dν,dφ} {\text{) =σ}}^{\text{2}} {\text{[4π}}^{\text{2}} \text{(Δ} {\text{t}}^{\text{2}} \text{d} {\text{ν}}^{\text{2}} \text{+Δ} {\text{f}}^{\text{2}} \text{d} {\text{τ}}^{\text{2}} \text{)-2µ} \text{d} \text{ν} \text{d} \text{τ+} \text{d} {\text{φ}}^{\text{2}} \text{+} \text{o} \text{(} \text{d} {\text{ν}}^{\text{2}} \text{+} \text{d} {\text{τ}}^{\text{2}} \text{+} \text{d} {\text{φ}}^{\text{2}} \text{)]}$

On en déduit que la fonction d'intersymbole Is admet à l'origine un cône tangent d'équation:$\text{z} \text{=} \sqrt{{\text{4π}}^{\text{2}} \text{(Δ} {\text{t}}^{\text{2}} {\text{ν}}^{\text{2}} \text{+Δ} {\text{f}}^{\text{2}} {\text{τ}}^{\text{2}} \text{)-2µντ}}$

L'intersection de ce cône avec le plan z = 1 (intersymbole maximum) délimite une surface de contour elliptique dont l'aire ξ peut être considérée comme une mesure de la sensibilité au délai et au Doppler. Lorsque µₓ est nul, cette ellipse a pour axes de symétrie les axes temporel et fréquentiel, et s'étend de ±1/2πΔf selon l'axe temporel et ±1/2πΔt selon l'axe fréquentiel. On a donc:$\text{ξ = 1/4 πΔ} \text{t} \text{Δ} \text{f}$

En vertu de l'inégalité de Heisenberg, ξ ne peut pas dépasser l'unité. Ce résultat se généralise au cas où µₓ est différent de 0. Considérons la fonction y(t) obtenue en multipliant la fonction x(t) par une wobulation:$\text{y} \text{(} \text{t} \text{) =} \text{e} {\text{}}^{\text{i} {\text{πβt}}^{\text{2}}} \text{x} \text{(} \text{t} \text{) ⇒} \text{y} \text{' (} \text{t} \text{) =} \text{e} {\text{}}^{\text{i} \text{πβ} {\text{t}}^{\text{2}}} \text{(} \text{x} \text{' (} \text{t} \text{) + 2iπβ} \text{t} \text{x(t))}$

On peut donc écrire:

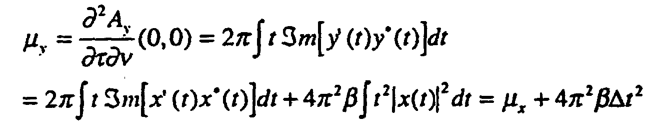

Il est donc toujours possible d'annuler µ_{y} en choisissant β de façon appropriée. Or l'opération de multiplication par une wobulation réalise un simple changement d'axes de la fonction d'ambiguïté associée, avec conservation des aires. On en déduit le paramètre ξ est donc toujours compris entre 0 et 1.

Ce résultat est extrêmement important, puisqu'il permet de comparer les performances de toutes les MCM dans des canaux dispersifs à partir d'un paramètre unique. On constate donc que ces performances ne dépendent que de la concentration de la fonction prototype associée. L'optimum est atteint virtuellement par la gaussienne, mais cet optimum est inaccessible, puisque les gaussiennes ne permettent pas de construire une base hilbertienne.

### ANNEXE 3

### 1. Introduction

Cette annexe donne une méthode de construction de fonction prototypes vérifiant les critères d'orthogonalité requis. La méthode permet d'obtenir une infinité de fonctions, parmi lesquelles une solution particulière (appelée fonction IOTA) possédant la particularité d'être identique à sa transformée de Fourier.

### 2. Fonction d'ambiguïté

Ce chapitre rappelle les principales propriétés de la fonction d'ambiguïté, et décrit différents opérateurs agissant sur cette fonction.

### 2.1 Rappels sur la fonction d'ambiguïté

### 2.1.1 Définitions

Soit une fonction x(t) et sa transformée de Fourier X(f). On peut lui associer ses produits temporel et fréquentiel définis respectivement par:

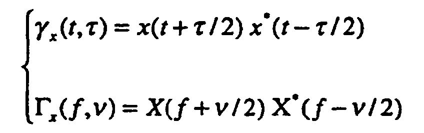

La transformée de Wigner-Ville et la fonction d'ambiguïté de x sont alors données par:

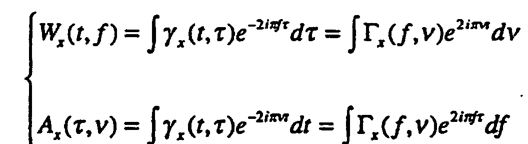

### 2.1.2. Propriétés de symétrie de la fonction d'ambiguïté

Soit une fonction x(t). On notera respectivement par x- et x les fonctions défini de la manière suivante:

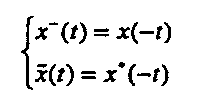

On a alors les relations:${\text{A}}_{\text{x}} \text{(τ,ν)=∫} {\text{e}}^{\text{-2iπν} \text{t}} \text{x} \text{(} \text{t} \text{+τ/2)} \text{x} \text{*(} \text{t} \text{-τ/2)} \text{dt} \text{= ∫} {\text{e}}^{\text{-2iπν} \text{t}} \text{x} \text{(-} \text{t} \text{- τ/2)} \text{x} \text{* (-} \text{t} \text{+τ/ 2)} \text{dt}$ soit, en posant *u* = -*t*:${\text{A}}_{\text{x}} \text{(τ,ν)=∫} {\text{e}}^{\text{2iπν} \text{u}} \text{x} \text{(-} \text{u} \text{+τ/2)} \text{x} \text{*(-u-τ/2)} \text{du} \text{=} \text{∫} {\text{e}}^{\text{2iπνu}} \text{x} \text{(} \text{u} \text{- τ/2)} \text{x} \text{*(} \text{u} \text{+ τ/2)} \text{du} \text{=} {\text{A}}_{\text{x}} \text{*(τ,ν)}$

On en conclut en particulier que si une fonction x est paire, c'est à dire que x = x⁻, sa fonction d'ambiguïté est réelle. Par ailleurs, on notera la relation suivante:${\text{A}}_{\text{x} \text{*}} {\text{(τ,ν)=∫e}}^{\text{-2iπνt}} \text{x} \text{*(} \text{u} \text{+τ/2)} \text{x} \text{(} \text{u} \text{-τ/2)} \text{du} \text{=} {\text{A}}_{\text{x}} \text{(-τ,ν)}$

En combinant ces deux relations, on obtient:$\text{A} {\text{}}_{\overline{\text{x}}} \text{(τ,ν) =} {\text{A}}_{\text{x}} \text{(τ,-ν)}$

### 2.1.3. Fonction d'ambiguïté et transformée de Fourier

On peut réécrire la définition de la fonction d'ambiguïté de la façon suivante:${\text{A}}_{\text{x}} {\text{(τ,ν) = ∫Γ}}_{\text{x}} \text{(ƒ,ν)} {\text{e}}^{\text{2iπƒτ}} \text{df} {\text{= ∫γ}}_{\text{x}} \text{(ƒ,ν)} {\text{e}}^{\text{2} \text{i} \text{πƒτ}} \text{d} \text{ƒ=} {\text{A}}_{\text{x}} \text{(ν,-τ)}$ ou encore : *A*_{*x*}(τ,ν) = *A*_{*x*} (-ν,τ)

### 2.1.4. Fonction d'ambiguïté et translation temps fréquence

Considérons une fonction translatée d'une fonction prototype x(t) quelconque, soit:${\text{x}}_{\text{k}} \text{=} \text{e} {\text{}}^{\text{i} {\text{ϕ}}_{\text{k}}} \text{e} {\text{}}^{\text{2} \text{i} {\text{πν}}_{\text{k}} \text{t}} \text{x} \text{(} \text{t} {\text{- τ}}_{\text{k}} \text{)}$

La fonction d'ambiguïté associée s'écrit:$\text{A} {\text{}}_{{\text{x}}_{\text{k}}} \text{(τ,ν) = ∫} {\text{e}}^{\text{-2} \text{i} \text{πν} \text{t}} \text{e} {\text{}}^{\text{i} {\text{ϕ}}_{\text{k}}} \text{e} {\text{}}^{\text{2} \text{i} {\text{πν}}_{\text{k}} \text{(} \text{t} \text{+τ/2)}} \text{x} \text{(} \text{t} {\text{-τ}}_{\text{k}} \text{+τ/2)} \text{e} {\text{}}^{{\text{-1ϕ}}_{\text{k}}} \text{e} {\text{}}^{\text{-2} \text{i} {\text{πν}}_{\text{k}} \text{(} \text{t} \text{-τ/2)}} \text{x} \text{*(} \text{t} \text{-τ} \text{k} \text{-τ/2)} \text{dt} \text{= ∫} {\text{e}}^{\text{-2} \text{i} \text{πνt}} \text{e} {\text{}}^{\text{2} \text{i} {\text{πν}}_{\text{k}} \text{τ}} \text{x} \text{(} \text{t} {\text{-τ}}_{\text{k}} \text{+τ/2)} \text{x} \text{*(} \text{t} {\text{-τ}}_{\text{k}} \text{-τ/2)} \text{dt}$ soit, en posant *u = t -* τₖ$\text{A} {\text{}}_{{\text{x}}_{\text{k}}} \text{(τ, ν) =} \text{e} {\text{}}^{\text{2} \text{i} {\text{π(ν}}_{\text{k}} {\text{τ-ντ}}_{\text{k}} \text{)}} \text{∫} {\text{e}}^{\text{-2iπνu}} \text{x} \text{(} \text{u} \text{+ τ /2)} \text{x} \text{* (} \text{u} \text{- τ/2)} \text{du} \text{=} \text{e} {\text{}}^{\text{2} \text{i} {\text{π(ν}}_{\text{k}} {\text{τ-ντ}}_{\text{k}} \text{)}} {\text{A}}_{\text{x}} \text{(τ,ν)}$

### 2.2 Orthogonalité et fonction d'ambiguïté

### 2.2.1 Cas général

On considère deux fonctions translatées d'une même fonction x(t), soit:${\text{x}}_{\text{k}} \text{=} \text{e} {\text{}}^{\text{i} {\text{ϕ}}_{\text{k}}} \text{e} {\text{}}^{\text{2} \text{i} {\text{πν}}_{\text{k}} \text{t}} \text{x} \text{(} \text{t} {\text{-τ}}_{\text{k}} \text{)}$${\text{x}}_{\text{k'}} \text{=} \text{e} {\text{}}^{\text{i} {\text{ϕ}}_{\text{k} \text{'}} \text{ϕ}} \text{e} {\text{}}^{\text{2} \text{i} {\text{πν}}_{\text{k'}} \text{t}} \text{x} \text{(} \text{t} {\text{-τ}}_{\text{k'}} \text{)}$

Le produit scalaire de ces deux fonctions s'écrit:$\text{〈} {\text{x}}_{\text{k}} \text{|} {\text{x}}_{\text{k'}} \text{〉=} \text{e} {\text{}}^{\text{i} {\text{(ϕ}}_{\text{k}} {\text{-ϕ}}_{\text{k'}} \text{)}} \text{∫} \text{e} {\text{}}^{\text{2} \text{i} {\text{π(ν}}_{\text{k}} {\text{-ν}}_{\text{k'}} \text{)} \text{t}} \text{x} \text{(} \text{t} {\text{- τ}}_{\text{k}} \text{)} \text{x} \text{* (} \text{t} {\text{- τ}}_{\text{k'}} \text{)} \text{dt}$ soit, en posant *u* = *t* - (τ_{*k*} + τ_{*k'*})/2:$\text{〈} {\text{x}}_{\text{k}} \text{|} {\text{x}}_{\text{k'}} \text{〉 =} \text{e} {\text{}}^{{\text{i(ϕ}}_{\text{k}} {\text{-ϕ}}_{\text{k'}} \text{)}} \text{e} {\text{}}^{{\text{2iπ(ν}}_{\text{k}} {\text{-v}}_{\text{k} \text{'}} {\text{)(τ}}_{\text{k}} {\text{+τ}}_{\text{k'}} \text{)}} \text{∫} \text{e} {\text{}}^{\text{2} \text{i} {\text{π(ν}}_{\text{k}} {\text{-ν}}_{\text{k'}} \text{)} \text{u}} \text{x} \text{(} \text{u} {\text{+ (τ}}_{\text{k'}} {\text{- τ}}_{\text{k}} \text{)/2)} \text{x} \text{*(} \text{u} {\text{-(τ}}_{\text{k'}} {\text{-τ}}_{\text{k}} \text{)/2)} \text{du} \text{=} \text{e} {\text{}}^{\text{i} {\text{(ϕ}}_{\text{k}} {\text{-ϕ}}_{\text{k'}} \text{)}} \text{e} {\text{}}^{\text{2} \text{i} {\text{π(ν}}_{\text{k}} {\text{-ν}}_{\text{k'}} {\text{)(τ}}_{\text{k}} {\text{+τ}}_{\text{k'}} \text{)}} {\text{A}}_{\text{x}} {\text{(τ}}_{\text{k'}} {\text{-τ}}_{\text{k}} {\text{,ν}}_{\text{k'}} {\text{- ν}}_{\text{k}} \text{)}$

### 3. Bases hilbertiennes sur des réseaux orthogonaux

### 3. 1. Princines généraux de construction

On considère un ensemble de fonctions {x_{m,n}} défini par:${\text{x}}_{\text{m,n}} \text{(t)} \text{=} {\text{e}}^{\text{i} \text{(} \text{m} \text{+} \text{n} \text{)π/2}} \text{e} {\text{}}^{\text{2} \text{i} \text{π} \text{m} {\text{ν}}_{\text{0}} \text{t}} \text{x} \text{(} \text{t} \text{-} \text{n} {\text{τ}}_{\text{0}} {\text{) avec ν}}_{\text{0}} {\text{τ}}_{\text{0}} \text{= 1/2}$

On cherche les conditions sur x(t) pour que cet ensemble {x_{m,n}} constitue une base hilbertienne de **H**_{**R**}. On imposera que x(t) soit une fonction paire, dont la fonction d'ambiguïté Aₓ est donc réelle.

Le produit scalaire dans **R** de x_{m,n} et de x_{m',n'} peut s'écrire

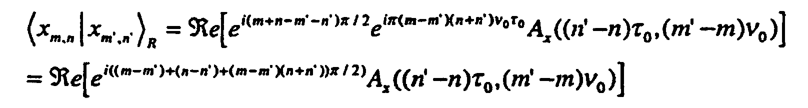

On notera la relation de congruence modulo 2:$\text{(} \text{m} \text{-} \text{m'} \text{)+(} \text{n} \text{-} \text{n'} \text{)+(m-} \text{m'} \text{)(} \text{n} \text{+} \text{n'} \text{)≡1-(} \text{m} \text{-} \text{m'} \text{+1)(} \text{n} \text{-} \text{n'} \text{+1)}$

Par conséquent, si *(m,n) ≠ (m' ,n'*) modulo 2, le produit scalaire est nul. Le réseau {x_{m,n}} peut donc se décomposer en quatre sous-réseaux caractérisés par: {m pair, n pair},{m pair, n impair},{m impair n pair},{m impair, n impair}. L'orthogonalité entre fonctions appartenant à des sous-réseaux différents est donc automatique, et ne dépend pas des propriétés de la fonction prototype, dès l'instant où celle-ci est paire.

Il reste ensuite à garantir que les fonctions d'un même sous-réseau soient orthogonales entre elles. Il suffit pour cela que la fonction d'ambiguïté Aₓ vérifie:${\text{A}}_{\text{x}} \text{(2} \text{n} {\text{τ}}_{\text{0}} \text{,2} \text{m} {\text{ν}}_{\text{0}} \text{) = 0 ∀(} \text{m,n} \text{) ≠ (0,0)}$

On constate donc que le problème de la construction de bases hilbertiennes de **H**_{**R**} sur un réseau orthogonal de densité 2 se ramène à celui de la construction d'une fonction prototype paire dont la fonction d'ambiguïté s'annule sur un réseau de densité 1/2.

### 3.2. Méthodes d'orthogonalisation

### 3.2.1. Orthogonalisation temporelle

### Définition:

Soit une fonction x(t) de transformée de Fourier X(f). On appelle **O**_{**t**} l'opérateur d'orthagonalisation temporelle qui associe à x(t) une fonction y(t) définie par sa transformée de Fourier Y(f):

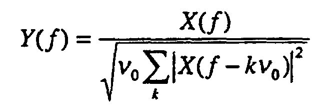

Par construction, on a: 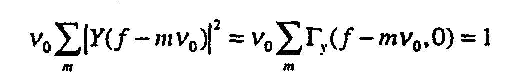 soit, par transformée de Fourier inverse: 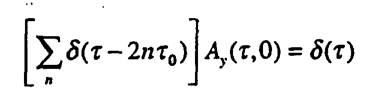 soit encore${\text{A}}_{\text{y}} \text{(2} \text{n} {\text{τ}}_{\text{0}} \text{,0) = 0 ∀} \text{n} \text{≠ 0 et} {\text{A}}_{\text{y}} \text{(0,0) = 1}$

On réalise donc bien l'orthogonalisation sur l'axe temporel. On note en outre que cet opérateur normalise y.

Soit x une fonction gaussienne et y = **O**_{**t**}**x**. Considérons l'expression:

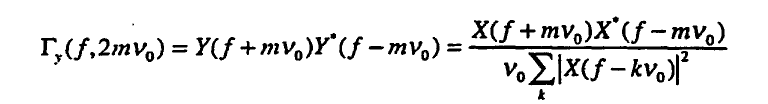

Puisque X est une gaussienne, on peut écrire:$\text{X} \text{(} \text{f} \text{+} \text{m} {\text{ν}}_{\text{0}} \text{)} \text{X} \text{*(} \text{f} \text{-} \text{m} {\text{ν}}_{\text{0}} \text{) =} {\text{c}}_{\text{m}} \text{|} \text{X} \text{(} \text{f} {\text{)|}}^{\text{2}}$ où cₘ est une constante. On en déduit que:${\text{Γ}}_{\text{y}} \text{(} \text{f} \text{,2} \text{m} {\text{ν}}_{\text{0}} \text{) =} {\text{c}}_{\text{m}} {\text{Γ}}_{\text{y}} \text{(} \text{f} \text{,0)}$

Par transformée de Fourier inverse, on obtient:${\text{A}}_{\text{y}} \text{(τ,2} \text{m} {\text{ν}}_{\text{0}} \text{) =} {\text{c}}_{\text{m}} {\text{A}}_{\text{y}} \text{(τ,0)}$

Par conséquent:$\text{∀} \text{m} \text{, ∀} \text{n} \text{≠ 0} {\text{A}}_{\text{y}} \text{(2} \text{n} {\text{τ}}_{\text{0}} \text{,2} \text{m} {\text{ν}}_{\text{0}} \text{) = 0}$

L'opérateur d'orthogonalisation temporelle **O**_{**t**} orthogonalise donc l'ensemble du réseau, à l'exception de l'axe des fréquences.

### Théorème 1

Soit x une fonction gaussienne et y = **O**_{**t**}x, alors:$\text{∀} \text{m} \text{,∀} \text{n} {\text{# 0 A}}_{\text{y}} \text{(2} \text{n} {\text{τ}}_{\text{0}} \text{,2} \text{m} {\text{ν}}_{\text{0}} \text{) = 0}$

### 3.2.2. Orthogonalisation fréquentielle

### Définition

Soit une fonction x(t). On appelle **O**_{**f**} l'opérateur d'orthogonalisation fréquentielle qui associe à x(t) une fonction y(t) définie par:

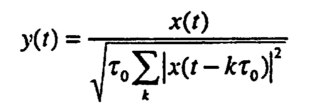

Par construction, on a: 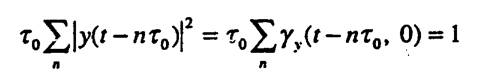 soit, par transformée de Fourier: 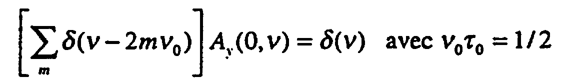 soit encore${\text{A}}_{\text{y}} \text{(0, 2} \text{m} {\text{ν}}_{\text{0}} \text{) = 0 ∀} \text{m} \text{# 0 et} {\text{A}}_{\text{y}} \text{(0,0) = 1}$

On réalise donc bien l'orthogonalisation sur l'axe fréquentiel. On note en outre que cet opérateur normalise y.

Soit x une fonction gaussienne et z = **O**_{**f**}**y**, avec y = **O**_{**t**}**x**. Considérons l'expression:

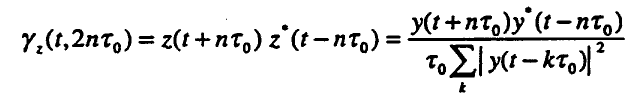

On peut donc ecrire:${\text{γ}}_{\text{z}} \text{(t,2} \text{n} {\text{τ}}_{\text{0}} {\text{) = γ}}_{\text{y}} \text{(} \text{t} \text{,2} \text{n} {\text{τ}}_{\text{0}} \text{)} \text{P} \text{(} \text{t} \text{)}$ où P(t) est une fonction périodique de période τ₀, qui admet un développement en série de Fourier du type ∑*a*_{*k*}*e*^{4*i*π*k*ν₀*t*}

Par transformée de Fourier, on obtient: 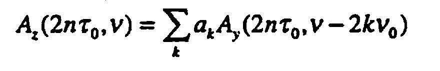 Or$\text{∀} \text{m} \text{,∀} \text{n} \text{≠ 0,} {\text{A}}_{\text{y}} \text{(} \text{2n} {\text{τ}}_{\text{0}} \text{,2} \text{m} {\text{ν}}_{\text{0}} \text{) = 0 ⇒} \text{∀} \text{m} \text{,∀} \text{n} \text{≠ 0,} {\text{A}}_{\text{z}} \text{(2} \text{n} {\text{τ}}_{\text{0}} \text{,2} \text{m} {\text{ν}}_{\text{0}} \text{) = 0}$

De plus, par construction,$\text{∀} \text{m} \text{≠ 0,} {\text{A}}_{\text{z}} \text{(0, 2} \text{m} {\text{ν}}_{\text{0}} \text{) = 0}$

On a donc finalement:$\text{∀(} \text{m,n} {\text{)≠ (0,0) , A}}_{\text{z}} \text{(2} \text{n} {\text{τ}}_{\text{0}} \text{,2} \text{m} {\text{ν}}_{\text{0}} \text{) = 0}$

Ainsi, la fonction d'ambiguïté de z s'annule en dehors de (0,0) pour tous les multiples de 2τ₀ et de 2ν₀ , soit un réseau de densité 1/2.

### Théorème 2

Soit x une fonction gaussienne et z = **O**_{**f**}**O**_{**t**}x , alors:$\text{∀(} \text{m} \text{,} \text{n} \text{) ≠ (0,0),} {\text{A}}_{\text{z}} \text{(2} \text{n} {\text{τ}}_{\text{0}} \text{,2} \text{m} {\text{ν}}_{\text{0}} \text{) = 0}$

### 3.3. L'opérateur d'orthogonalisation O

Au vu de ce qui précède; il apparaît clairement qu'il existe une échelle temps-fréquence qui symétrise l'écriture des équations: Il suffit pour cela de choisir τ₀ = ν₀ = 1/$\sqrt{\text{2}}$. On renormalisera donc les échelles en conséquence, sans que cela nuise à la généralité des démonstrations.

### 3.3.1. Définition

On appelle **O** l'opérateur d'orthogonalisation qui associe à une fonction x la fonction y définie par:

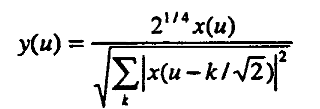

En outre, on appellera par la suite **F** l'opérateur de transformée de Fourier.

### 3.3.2. Idempotence de l'opérateur O

Soit z = **O**y et y = **O**x. On peut écrire:

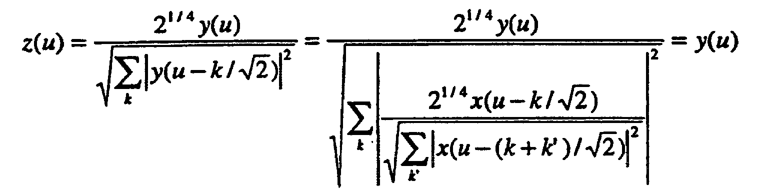

On a donc **OO**x = **O**x, ce qui démontre l'idempotence de l'opérateur **O**. De la même façon, l'opérateur dual **F**^{**-1**}**OF** est également idempotent, puisque **F**^{**-1**}**OFF**^{**-1**}**OF** = **F**^{**-1**}**OOF** = **F**^{**-1**}**OF**.

### 3.3.3. Lemme 1

Soit P une fonction périodique de période 1/$\sqrt{\text{2}}$ et D une distribution de la forme:

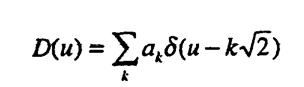

Soit x une fonction quelconque:

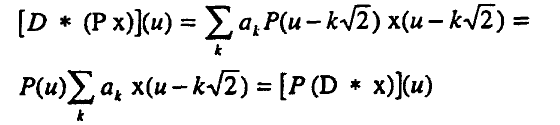

### Lemme 1

Soit P une fonction périodique de période 1/ $\sqrt{\text{2}}$ et D une distribution de la forme 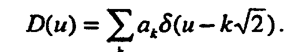 Soit x une fonction quelconque. On a :$\text{D * (P x) =} \text{P} \text{(D * x)}$

### Lemme 2

Soit la fonction y_{α} définie par *y*_{*α*} = *D* * *x*_{*α*}*,* avec x_{α} = (2α)^{1/4} *e*^{παµ2}, et D étant une distribution de la forme

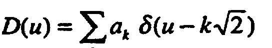

On peut donc écrire:

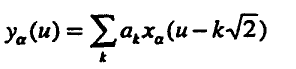

Considérons la somme:

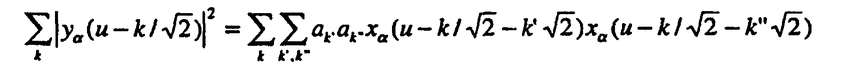

Soit encore, par application du résultat donné en appendice (§ 4): 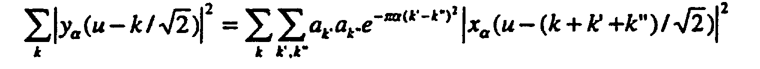 puis, en réorganisant les indices et en redéfinissant k comme k + k' + k":

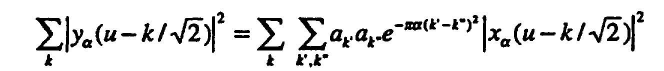

On peut donc écrire: 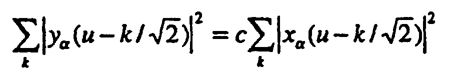 avec

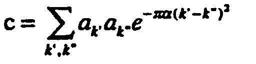

On peut estimer aisément le coefficient c en réécrivant la relation précédente sous la forme:

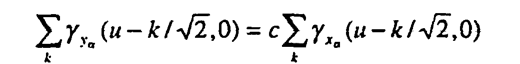

Soit, par transformée de Fourier:

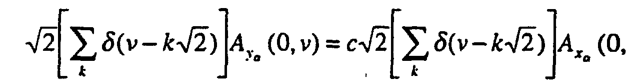

En particulier, on en déduit:${\text{∥y}}_{\text{α}} {\text{∥}}^{\text{2}} {\text{= A}}_{\text{yα}} \text{(0,0) =} {\text{cA}}_{\text{xα}} \text{(0,0) =} {\text{c∥x}}_{\text{α}} {\text{∥}}^{\text{2}}$

On a donc finalement:

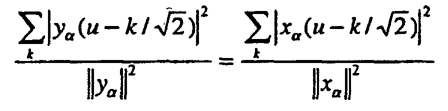

### Lemme2

Soit la fonction *y*_{*α*} définie par y_{α} = *D* * x_{α}, avec *x*_{*α*} = *(2α*)^{1/4} *e*^{-πα*u*2}, et D étant une distribution de la forme 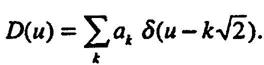 On peut écrire:

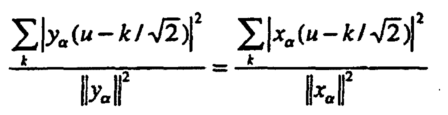

### 3 3.5. Commutativité des opérateurs O et F⁻¹OF

Nous allons maintenant démontrer que les opérateurs **O** et **F**^{**-1**}**OF** commutent lorsqu'ils sont appliqués à une gaussienne. Soit *x*_{*α*} = (2α)^{1/4}*e*^{*-παu2*}.
Alors **F***X*_{*α*} = X_{1/α}
et **O***x*_{*α*} = *P*_{*α*}*x*_{α}
P_{α} étant défini par la relation: 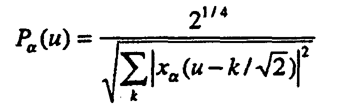 et sa transformée de Fourier D_{α} par: 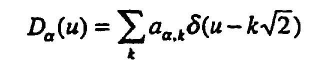 Soit *y*_{*α*} = **F**^{**-1**}**OF**x_{α}et z_{α} =**O**y_{α}. On peut écrire:${\text{y}}_{\text{α}} \text{=} {\text{F}}^{\text{-1}} \text{OF} {\text{x}}_{\text{α}} {\text{= F}}^{\text{-1}} \text{O} {\text{x}}_{\text{1/α}} {\text{= F}}^{\text{-}} {\text{}}^{\text{1}} {\text{(P}}_{\text{1/α}} {\text{x}}_{\text{1/α}} \text{) =} {\text{D}}_{\text{1/α}} \text{*} {\text{x}}_{\text{α}}$ et 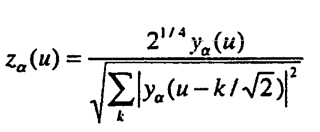 *x*_{***α***} et *y*_{*α*} étant de norme unité, on peut écrire, en application du lemme 2:

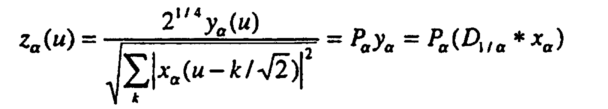

De la même façon, on définit:${\text{w}}_{\text{1/α}} \text{=FO} {\text{x}}_{\text{α}} \text{=F(} {\text{P}}_{\text{α}} {\text{x}}_{\text{α}} \text{)=} {\text{D}}_{\text{α}} \text{*} {\text{x}}_{\text{1/α}}$

On peut écrire: 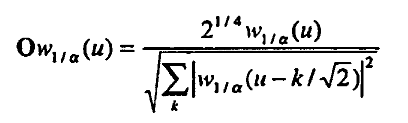 *x*_{1/α} et *w*_{1/α} étant de norme unité, on a, en application du lemme 2:

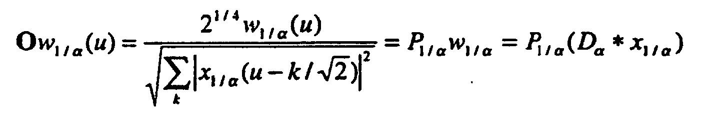

Soit, par transformée de Fourier inverse:${\text{F}}^{\text{-1}} \text{OFO} {\text{x}}_{\text{α}} {\text{=F}}^{\text{-1}} \text{O} {\text{w}}_{\text{1/α}} {\text{=D}}_{\text{1/α}} \text{*(} {\text{P}}_{\text{α}} {\text{x}}_{\text{α}} \text{)}$

Or, par application du lemme 1:${\text{D}}_{\text{1/α}} \text{* (} {\text{P}}_{\text{α}} {\text{x}}_{\text{α}} \text{)=} {\text{P}}_{\text{α}} \text{(} {\text{D}}_{\text{1/α}} \text{*} {\text{x}}_{\text{α}} \text{)}$

On en déduit que:${\text{OF}}^{\text{-1}} {\text{OFx}}_{\text{α}} {\text{= F}}^{\text{-1}} {\text{OFOx}}_{\text{α}}$

### Théorème 3

Pour toute fonction gaussienne x, les opérateurs **O** et **F**^{**-1**}**OF** commutent, soit:${\text{OF}}^{\text{-1}} {\text{OFx = F}}^{\text{-1}} \text{OFOx}$

### Corollaire 1

Soit z_{α} = **OF**^{**-1**}**OF**x_{α}, avec *x*_{*α*} = (2α)^{1/4}*e*^{-πα*u*2} , alors **F**z_{α} = z_{1/α} Démonstration:${\text{Fz}}_{\text{α}} {\text{= FF}}^{\text{-1}} {\text{OFOx}}_{\text{α}} {\text{= OF}}^{\text{-1}} {\text{Ox}}_{\text{α}} {\text{= OF}}^{\text{-1}} {\text{OFx}}_{\text{1/α}} {\text{= z}}_{\text{1/α}}$

### Cas particulier remarquable

${\text{F z}}_{\text{1}} {\text{= z}}_{\text{1}}$

Cette fonction particulière confère une parfaite symétrie aux axes temps et fréquence, et constitue donc la fonction prototype de la transformée IOTA (Isotropic Orthogonal Transform Algorithm). On notera cette fonction particulière 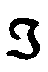 .

### Corollaire 2

Soit x une fonction gaussienne et z = **OF**^{**-1**}**OF**x , alors **O**z = z
Démonstration:${\text{Oz = OOF}}^{\text{-1}} {\text{OFx = OF}}^{\text{-1}} \text{OFx = z}$

### Corollaire 3

Soit x une fonction gaussienne et z = **OF**^{**-1**}**OFx** , alors **F**^{**-1**}**OFz = z**
Démonstration:${\text{F}}^{\text{-1}} {\text{OFz = F}}^{\text{-1}} {\text{OFF}}^{\text{-1}} {\text{OFOx = F}}^{\text{-1}} {\text{OOFOx = F}}^{\text{-1}} \text{OFOx = z}$

### 3.3.6. Fonction d'ambiguïté des fonctions z_{α}

Considérons le théorème 2, avec la normalisation τ₀ = ν₀ = 1/$\sqrt{\text{2}}$. Alors:${\text{O}}_{\text{f}} {\text{= O et O}}_{\text{t}} {\text{= F}}^{\text{-1}} \text{OF}$ Par conséquent, le théorème 2 peut se réécrire:

### Théorème 4

Soit x une fonction gaussienne et z = **F**^{**-1**}**OFO**x , alors:$\text{∀(} \text{m} \text{,} \text{n} \text{) ≠ (0,0) ,} {\text{A}}_{\text{z}} \text{(} \text{n} \sqrt{\text{2}} \text{,} \text{m} \sqrt{\text{2}} \text{)=0}$

### 4. Appendice

Soit une fonction gaussienne normalisée x_{α} définie par:${\text{x}}_{\text{α}} \text{(} \text{u)} \text{=} {\text{(2}}_{\text{α}} {\text{)}}^{\text{1/4}} \text{e} {\text{}}^{\text{-π} {\text{αu}}^{\text{2}}}$

Le produit *x*_{*α*} (*u* - *a*)*x*_{*α*} (*u* - *b*) peut donc s'écrire:$\text{x} \text{(} \text{u} \text{-} \text{a} \text{)} \text{x} \text{(} \text{u} \text{-} \text{b} \text{) =} \sqrt{\text{2α}} \text{e} {\text{}}^{\text{-πα((} \text{u} {\text{-α)}}^{\text{2}} \text{+(} \text{u} \text{-} \text{b} {\text{)}}^{\text{2}}}$

Or, on a l'identité:

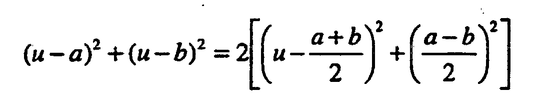

Finalement, on peut écrire:

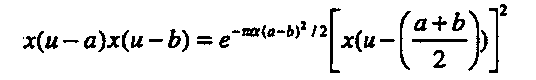

## Revendications

1. Signal multiporteuse destiné à être transmis vers des récepteurs numériques, notamment dans un canal de transmission non-stationnaire, correspondant au multiplexage en fréquence de plusieurs porteuses élémentaires correspondant chacunes à une série de symboles, deux symboles consécutifs étant séparés d'un temps symbole τ₀,
**caractérisé** d'une part **en ce que** l'espacement ν₀ entre deux porteuses voisines est égal à la moitié de l'inverse du temps symbole τ₀,
et d'autre part en ce que chaque porteuse subit un filtrage (94) de mise en forme de son spectre présentant une largeur de bande supérieure à deux fois ledit espacement entre porteuses ν₀, et choisi de façon que chaque symbole soit concentré dans le domaine temporel et dans le domaine fréquentiel.

2. Signal selon la revendication 1, **caractérisé en ce que** son enveloppe complexe répond à l'équation suivante: 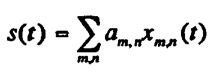 où:
a_{m,n} est un coefficient réel représentatif du signal source, choisi dans un alphabet de modulation prédéterminé;
m est un entier représentant la dimension fréquentielle;
n est un entier représentant la dimension temporelle;
t représente le temps;
x_{m,n}(t) est une fonction de base, translatée dans l'espace temps-fréquence d'une même fonction prototype x(t) paire prenant des valeurs réelles ou complexes, soit :${\text{X}}_{\text{m,n}} \text{(} \text{t} \text{) = ≠} {\text{i}}^{\text{m} \text{+} \text{n}} \text{e} {\text{}}^{\text{i} \text{(2π} \text{m} {\text{ν}}_{\text{0}} \text{t} \text{+ϕ)}} \text{x} \text{(} \text{t-} {\text{nτ}}_{\text{0}} \text{)} \text{avec} {\text{ν}}_{\text{0}} {\text{τ}}_{\text{0}} \text{= 1/2}$
où ϕ est un paramètre de phase arbitraire,
la transformée de Fourier X(f) de la fonction x(t) ayant un support s'étendant au-delà de l'intervalle [-ν₀,ν₀],
et où lesdites fonctions de base {_{Xm,n}} sont orthogonales entre elles, la partie réelle du produit scalaire de deux fonctions de base différentes étant nulle.

3. Signal selon la revendication 2, **caractérisé en ce que** ladite fonction prototype x(t) est une fonction paire, nulle en dehors de l'intervalle [-τ₀,τ₀], et vérifiant la relation

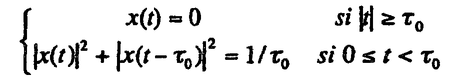

4. Signal selon la revendication 3, **caractérisé en ce que** ladite fonction prototype x(t) est définie par:

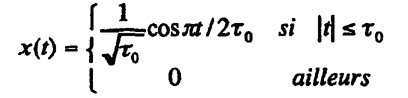

5. Signal selon la revendication 2, **caractérisé en ce que** ladite fonction prototype x(t) est **caractérisée par** l'équation: 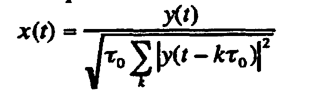 la fonction y(t) étant définie par sa transformée de Fourier Y(f): 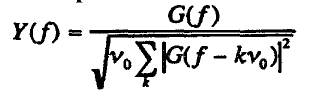 où G(f) est une fonction gaussienne normalisée du type : *G*(*f)* = (2α)^{1/4} e^{-πα*f*²}α étant un paramètre réel strictement positif.

6. Signal selon la revendication 5, **caractérisé en ce que** le paramètre α est égal à l'unité.

7. Procédé d'émission d'un signal multiporteuse vers des récepteurs numériques, notamment dans un canal de transmission non-stationnaire, ledit signal correspondant au multiplexage en fréquence de plusieurs porteuses élémentaires correspondant chacune à une série de symboles, deux symboles consécutifs étant séparés d'un temps symbole τ₀,
**caractérisé** d'une part **en ce que** l'espacement ν₀ entre deux porteuses voisines est égal à la moitié de l'inverse du temps symbole τ₀,
et d'autre part en ce que chaque porteuse subit un filtrage (94) de mise en forme de son spectre présentant une largeur de bande supérieure à deux fois ledit espacement entre porteuses ν₀, et choisi de façon que chaque symbole soit concentré dans le domaine temporel et dans le domaine fréquentiel.

8. Procédé d'émission d'un signal numérique selon la revendication 7, notamment dans un canal de transmission non-stationnaire, comprenant une étape de codage canal d'un signal numérique à transmettre, délivrant des coefficients numériques réels a_{m,n} choisis dans un alphabet prédéterminé,
**caractérisé en ce qu'**il comprend les étapes suivantes:
- construction (941 d'un signal s(t) répondant à l'équation suivante : 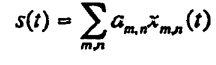
où:
. m est un entier représentant la dimension fréquentielle;
. n est un entier représentant la dimension temporelle;
. t représente le temps;
. x_{m,n}(t) est une fonction de base, translatée dans l'espace temps-fréquence d'une même fonction prototype x(t) paire prenant des valeurs réelles ou complexes, soit :${\text{x}}_{\text{m,n}} \text{(} \text{t} \text{)= ±} {\text{i}}^{\text{m} \text{+} \text{n}} \text{e} {\text{}}^{\text{i} \text{(2π} \text{m} {\text{ν}}_{\text{0}} \text{t} \text{+ϕ}} \text{x} \text{(} \text{t} \text{-} \text{n} {\text{τ}}_{\text{0}} \text{)} {\text{avec ν}}_{\text{0}} {\text{τ}}_{\text{0}} \text{1/2}$
où ϕ et un paramètre de phase arbitraire,
la transformée de Fourier X(f) de la fonction x(t) ayant un support s'étendant au-delà de l'intervalle [-ν₀,ν₀],
lesdites fonctions de base {X_{m,n}} étant orthogonales entre elles, la partie réelle du produit scalaire de deux fonctions de base différentes étant nulle;
- émission (911) d'un signal ayant pour enveloppe complexe ledit signal s(t) vers au moins un récepteur.

9. Procédé selon la revendication 8, **caractérisé en ce qu'**il comprend une étape (93) d'entrelacement en fréquence et/ou en temps, appliquée aux éléments binaires formant ledit signal numérique à transmettre ou aux coefficients numériques a_{m,n}.

10. Procédé d'émission selon l'une quelconque des revendications 8 et 9, **caractérisé en ce que** ladite fonction prototype est obtenue selon les étapes suivantes :
- sélection d'une fonction gaussienne G(f) normalisée du type :$\text{G(f)} {\text{= (2α)}}^{\text{1/4}} {\text{e}}^{\text{-πα} \text{f} \text{2}} \text{;}$
- détermination de ladite fonction prototype x(t) telle que : 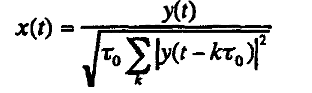 la fonction y(t) étant définie par sa transformée de Fourier Y(f):

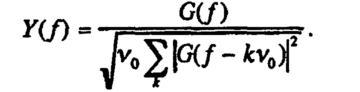

11. Procédé de réception d'un signal multiporteuse, **caractérisé en ce qu'**il comprend une étape de décodage dudit signal, ledit signal correspondant au multiplexage en fréquence de plusieurs porteuses élémentaires correspondant chacune à une série de symboles, deux symboles consécutifs étant séparés d'un temps symbole τ₀, l'espacement ν₀ entre deux porteuses voisines étant égal à la moitié de l'inverse du temps symbole τ₀,
et chaque porteuse ayant subi un filtrage (94) de mise en forme de son spectre présentant une largeur de bande supérieure à deux fois ledit espacement entre porteuses ν₀, et choisi de façon que chaque symbole soit concentré dans le domaine temporel et dans le domaine fréquentiel.

12. Procédé de réception selon la revendication 11 **caractérisé en ce qu'**il comprend les étapes suivantes :
- réception d'un signal ayant pour enveloppe complexe un signal r(t) ;
- estimation (106) de la réponse du canal de transmission, comprenant une estimation de la réponse de la phase θ_{m,n}, et de la réponse de l'amplitude ρ_{m,n};
- démodulation dudit signal r(t), comprenant les étapes suivantes :
- multiplication (111) dudit signal r(t) par une fonction prototype x(t) ;
- repliement ( 113) de la forme d'onde obtenue modulo 2τ₀ ;
- application (114) d'une transformée de Fourier (FFT) ;
- correction (115) de la phase θ_{m,n} induite par le canal de transmission ;
- correction (117) de la phase i^{m+n};
sélection (118) de la partie réelle ã_{m,n} correspondant au coefficient obtenu pondéré par la réponse de l'amplitude ρ_{m,n} du canal de transmission.

13. Procédé selon la revendication 12, **caractérisé en ce qu'**il comprend une étape de désentrelacement (108) en fréquence et/ou en temps desdits coefficients numériques réels *ã*_{*m,n*} et, éventuellement, des valeurs correspondantes rm,n de la réponse de l'amplitude du canal, ledit désentrelacement étant symétrique à un entrelacement mis en oeuvre à l'émission, et/ou une étape de décodage en décision pondérée adapté au codage canal mis en oeuvre à l'émission.

## Claims

1. Multicarrier signal designed to be transmitted to digital receivers, especially in a non-stationary transmission channel, corresponding to the frequency multiplexing of several elementary carriers each corresponding to a series of symbols, two consecutive symbols being separated by a symbol time τ₀, **characterised** on the one hand **in that** the spacing ν₀ between two adjacent carriers is equal to half the reciprocal of the symbol time τ₀,
and on the other hand in that each carrier undergoes transformation filtering (94) of its spectrum having a bandwidth greater than twice the said spacing between carriers ν₀ and chosen so that each symbol is concentrated in the time domain and in the frequency domain.

2. Signal according to claim 1, **characterised in that** its complex envelope is described by the following equation: 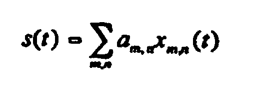 where:
a_{m,n} is a real coefficient that is representative of the source signal, chosen from a predetermined modulation alphabet;
m is an integer representing the frequency dimension;
n is an integer representing the time dimension;
t represents the time;
x_{m,n}^{(t)} is a basic function translated into the time-frequency space of the same even-order prototype function x(t) taking real or complex values, namely:${\text{x}}_{\text{m,n}} \text{(t)= ±} {\text{i}}^{\text{m} \text{+} \text{n}} \text{e} {\text{}}^{\text{i} \text{(2π} \text{m} {\text{ν}}_{\text{0}} \text{t} \text{+ϕ)}} \text{x} \text{(} \text{t} \text{-} \text{n} {\text{τ}}_{\text{0}} {\text{) with ν}}_{\text{0}} {\text{τ}}_{\text{0}} \text{= 1/2}$
where ϕ is an arbitrary phase parameter,
the Fourier transform X(f) of the function x(t) having a support extending beyond the interval [-ν₀,ν₀],
and where the said basic functions [x_{m,n}] are mutually orthogonal, the real part of the scalar product of two different basic functions being zero.

3. Signal according to claim 2, **characterised in that** the said prototype function x(t) is an even-order function that is zero outside the interval [-τ₀,τ₀], and verifies the relationship:

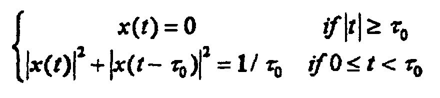

4. Signal according to claim 3, **characterised in that** the said prototype function x(t) is defined by:

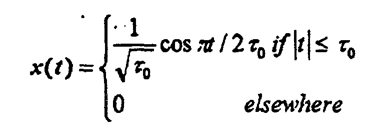

5. Signal according to claim 2, **characterised in that** the said prototype function x(t) is **characterised by** the equation: 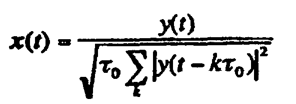 the function y(t) being defined by its Fourier transform Y(f): 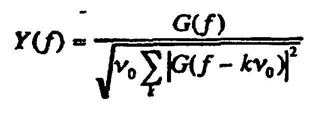 where G(f) is a normalised Gaussian function of the type: *G*(*f*)=(*2α*)^{1/4}*e*^{-πα*f*²}, α being a strictly positive real parameter.

6. Signal according to claim 5, **characterised in that** the parameter α is equal to unity.

7. Method for the transmission of a multicarrier signal to digital receivers, especially in a non-stationary transmission channel, the said signal corresponding to frequency multiplexing of several elementary carriers each corresponding to a series of symbols, two consecutive symbols being separated by a time symbol τ₀,
**characterised** on the one hand **in that** the spacing ν₀ between two adjacent carriers is equal to half the reciprocal of the time symbol τ₀,
and on the other hand in that each carrier undergoes a transformation filtering (94) of its spectrum having a bandwidth greater than twice the said spacing between carriers ν₀, and chosen so that each symbol is concentrated in the time domain and in the frequency domain.

8. Method for the transmission of a digital signal according to claim 7, in particular in a non stationary transmission channel, comprising a channel encoding stage of a digital signal to be transmitted, providing real digital coefficients a_{m,n} chosen from a predetermined alphabet;
**characterised in that** it comprises the following steps:
- construction (94) of a signal s(t) complying with the following equation: 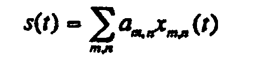 where
m is an integer representing the frequency dimension;
n is an integer representing the time dimension;
t represents the time;
x_{m,n}^{(t)} is a basic function translated into the time-frequency space of the same even-order prototype function x(t) taking real or complex values, namely:${\text{x}}_{\text{m,}} {\text{}}_{\text{n}} \text{(} \text{t} \text{) = ±} {\text{i}}^{\text{m} \text{+} \text{n}} \text{e} {\text{}}^{\text{i} \text{(2π} \text{m} {\text{ν}}_{\text{0}} \text{+ϕ)}} \text{x} \text{(} \text{t} \text{-} \text{n} {\text{τ}}_{\text{0}} \text{)} \text{with} {\text{ν}}_{\text{0}} {\text{τ}}_{\text{0}} \text{= 1/2}$ where ϕ is an arbitrary phase parameter,
the Fourier transform X(f) of the function x(t) having a support extending beyond the interval [-ν₀, ν₀],
the said basic functions [x_{m,n}] being mutually orthogonal, the real part of the scalar product of two different basic functions being zero;
- transmission (911) of a signal having the said signal s(t) as its complex envelope, to at least one receiver.

9. Method according to claim 8, **characterised in that** it comprises a frequency and/or time interlacing step (93) applied to the binary elements forming the said digital signal to be transmitted or to the digital coefficients a_{m,n}.

10. Transmission method according to either one of claims 8 and 9, **characterised in that** the said prototype function is obtained according to the following steps:
- selection of a normalised Gaussian function G(f) of the type:$\text{G} \text{(} \text{f} {\text{)=(2α)}}^{\text{1/4}} \text{e} {\text{}}^{\text{-πα} {\text{f}}^{\text{2}}} \text{;}$
- determination of the said prototype function x(t) such that: 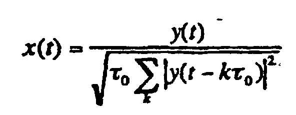 the function y(t) being defined by its Fourrier transform Y(f):

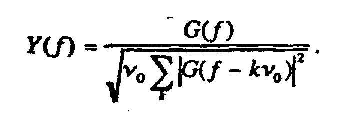

11. Method for the reception of a multicarrier signal, **characterised in that** it comprises a decoding step of the said signal, the said signal corresponding to the frequency multiplexing of a plurality of elementary carriers each corresponding to a series of symbols, two consecutive symbols being separated by a time symbol τ₀, the spacing ν₀ between two adjacent carriers being equal to half the reciprocal of the time symbol τ₀,
and **in that** each carrier undergoes a transformation filtering (94) of its spectrum having a bandwidth greater than twice the said spacing between carriers ν₀, and chosen so that each symbol is concentrated in the time domain and in the frequency domain.

12. Method for the reception of a signal according to claim 11, **characterised in that** it comprises the following steps:
- reception of a signal having as its complex envelope a signal r(t);
- estimation (106) of the response of the transmission channel, comprising an estimation of the phase response θ_{m,n} and of the amplitude response ρ_{m,n};
- demodulation of the said signal r(t), comprising the following steps:
- multiplication (111) of the said signal r(t) by a prototype function x(t); folding (113) of the obtained waveform modulo 2τ₀;
- application (114) of a Fourier transform (FFT);
- correction (115) of the phase θ_{m,n} induced by the transmission channel;
- correction (117) of the phase i^{m+n};
- selection (118) of the real part ã_{m,n} corresponding to the obtained coefficient weighted by the amplitude response ρ_{m,n} of the transmission channel.

13. Method according to claim 12, **characterised in that** it comprises a step (108) for the frequency and/or time de-interlacing of the said real digital coefficients ã_{m,n}, and, possibly, of the corresponding values ρ_{m,n} of the amplitude response of the channel, the said de-interlacing being symmetrical to an interlacing implemented at transmission, and/or a step of weighted decision decoding that is adapted to the channel encoding implemented at transmission.

## Patentansprüche

1. Mehrträgersignal, das zu digitalen Empfängern gesendet werden soll, insbesondere in einem nicht stationären Sendekanal, welches dem Frequenzmultiplexieren mehrerer, jeweils einer Symbolreihe entsprechender, elementarer Trägerfrequenzen entspricht, wobei der Abstand zweier aufeinanderfolgender Symbole eine Symboldauer τ₀ beträgt,
**dadurch gekennzeichnet, dass** der Abstand ν₀ zwischen benachbarten Trägerfrequenzen der Hälfte des Umkehrwertes der Symboldauer τ₀ gleicht und,
dass andererseits jedes Trägersignal eine Filterung (94) zur Gestaltung seines Spektrums unterläuft, das eine Bandbreite aufweist, die mehr als das Doppelte des Abstandes zwischen den Trägerfrequenzen ν₀ beträgt und so gewählt wird, das jedes Symbol im Zeitbereich und im Frequenzbereich konzentriert ist.

2. Signal nach Anspruch 1, **dadurch gekennzeichnet, dass** seine komplexe Umhüllende der folgenden Gleichung entspricht: 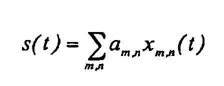 wobei:
aₘₙ ein reeller, für das Quellensignal repräsentativer Koeffizient ist, der in einem vorgegebenen Modulationsalphabet gewählt wurde;
m eine die Frequenzdimension darstellende ganze Zahl ist;
n eine die Zeitdimension darstellende ganze Zahl ist;
t die Zeit darstellt;
_{Xm,n}(t) eine in den Zeit-Frequenz-Raum einer selben geraden Prototypfunktion x(t) versetzte Grundfunktion ist, wobei die Funktion x(t) reelle oder komplexe Werte annimmt, d.h.:${\text{x}}_{\text{m,n}} \text{(} \text{t} \text{) = ±} {\text{i}}^{\text{m} \text{+} \text{n}} \text{e} {\text{}}^{\text{i} \text{(2π} \text{m} {\text{ν}}_{\text{0}} \text{t} \text{+ϕ)}} \text{x} \text{(} \text{t} \text{-} \text{n} {\text{τ}}_{\text{0}} {\text{) wobei ν}}_{\text{0}} {\text{τ}}_{\text{0}} \text{= ½}$
wobei ϕ ein beliebiger Phasenparameter ist,
die Fourier-Transformierte X(f) der Funktion x(t) einen Träger aufweist, der sich über das Intervall [-ν₀, ν₀] hinaus erstreckt und
wobei die erwähnten Grundfunktionen {x_{m,n}} untereinander orthogonal sind, wobei der reelle Teil des Skalarproduktes zweier verschiedener Grundfunktionen null ist.

3. Signal nach Anspruch 2, **dadurch gekennzeichnet, dass** die Prototypfunktion x(t) eine gerade Funktion ist, die außerhalb des Intervalls [-τ₀, τ₀] gleich null ist und die folgende Beziehung erfüllt:

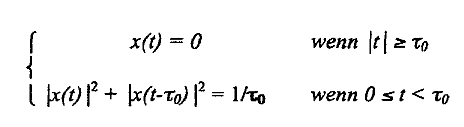

4. Signal nach Anspruch 3, **dadurch gekennzeichnet, dass** die Prototypfunktion x(t) definiert wird durch:

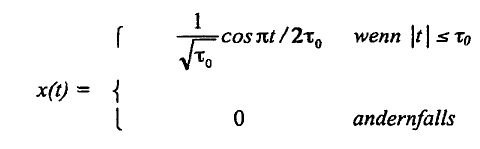

5. Signal nach Anspruch 2, **dadurch gekennzeichnet, dass** die Prototypfunktion - x(t) durch die folgende Gleichung charakterisiert wird: 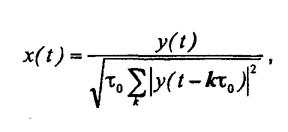 wobei die Funktion y(t) durch ihre Fourier-Transformierte Y(f) definiert ist: 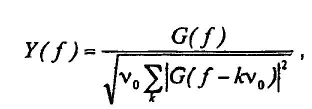 wobei G(f) eine normierte Gauss'sche Funktion des Typs: *G*(*f*) = (2α)^{1/4} *e*^{-πα}^{*f*}^{²} ist, wobei α ein streng positiver, reeller Parameter ist.

6. Signal nach Anspruch 5, **dadurch gekennzeichnet, dass** der Parameter α der Einheit gleicht.

7. Verfahren zum Senden eines Mehrträgersignals zu digitalen Empfängern, insbesondere in einem nicht stationären Sendekanal, wobei das Signal dem Frequenzmultiplexieren mehrerer, jeweils einer Symbolreihe entsprechender, elementarer Trägerfrequenzen entspricht, wobei der Abstand zweier aufeinanderfolgender Symbole eine Symboldauer τ₀ beträgt,
**dadurch gekennzeichnet, dass** der Abstand ν₀ zwischen benachbarten Trägerfrequenzen der Hälfte des Umkehrwertes der Symboldauer τ₀ gleicht und,
dass andererseits jedes Trägersignal eine Filterung (94) zur Gestaltung seines Spektrums unterläuft, das eine Bandbreite aufweist, die mehr als das Doppelte des Abstandes zwischen den Trägerfrequenzen ν₀ beträgt und so gewählt wird, das jedes Symbol im Zeitbereich und im Frequenzbereich konzentriert ist.

8. Sendeverfahren eines digitalen Signals nach Anspruch 7, insbesondere in einem nicht stationären Sendekanal, das einen Schritt zur Kanalkodierung eines zu sendenden digitalen Signals umfasst, welches aus einem vorgegebenen Alphabet gewählte reelle numerische Koeffizienten a_{m,n} liefert,
**dadurch gekennzeichnet, dass** es die folgenden Schritte umfasst:
- Konstruktion (94) eines Signals s(t), das der folgenden Gleichung genügt: 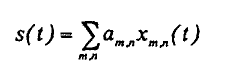
wobei:
• m eine die Frequenzdimension darstellende ganze Zahl ist;
• n eine die Zeitdimension darstellende ganze Zahl ist;
• t die Zeit darstellt;
• x_{m,n}(t) eine in den Zeit-Frequenzraum einer selben geraden Prototypfunktion x(t) versetzte Grundfunktion ist, wobei die Funktion reelle oder komplexe Werte annimmt, d.h.:${\text{x}}_{\text{m,n}} \text{(} \text{t} \text{) = ±} {\text{i}}^{\text{m} \text{+} \text{n}} \text{e} {\text{}}^{\text{i} \text{(2π} \text{m} {\text{ν}}_{\text{0}} \text{t} \text{+ϕ)}} \text{x} \text{(} \text{t} \text{-} \text{n} {\text{τ}}_{\text{0}} {\text{) wobei ν}}_{\text{0}} {\text{τ}}_{\text{0}} \text{= 1/2}$
wobei ϕ ein beliebiger Phasenparameter ist,
die Fourier-Transformierte X(f) der Funktion x(t) einen Träger aufweist, der sich über das Intervall [-ν₀, ν₀] hinaus erstreckt und,
wobei die erwähnten Grundfunktionen {X_{m,n}} untereinander orthogonal sind, wobei der reelle Teil des Skalarproduktes zweier verschiedener Grundfunktionen null ist;
- Senden (911) eines Signals, das als komplexe Umhüllende das zu mindestens einem Empfänger gesendete Signal s(t) besitzt.

9. Verfahren nach Anspruch 8, **dadurch gekennzeichnet, dass** es einen Schritt (93) der Frequenz- und/oder der Zeitverschachtelung umfasst, angewandt auf die binären Elemente, welche das zu sendende digitale Signal bilden, oder auf die numerischen Koeffizienten a_{m,n}.

10. Sendeverfahren nach einem der Ansprüche 8 oder 9, **dadurch gekennzeichnet, dass** die Prototypfunktion nach den folgenden Schritten erhalten wird:
- Wahl einer normierten Gauss'schen Funktion G(f) des Typs:$\text{G(f)} {\text{= (2α)}}^{\text{1/4}} \text{e} {\text{}}^{\text{-πα} {\text{f}}^{\text{2}}} \text{;}$
- Feststellung der Prototypfunktion x(t) von der Art, dass: 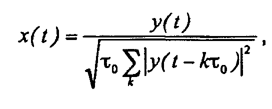
wobei die Funktion y(t) durch ihre Fourier-Transformierte Y(f) definiert ist:

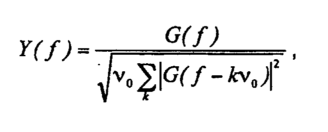

11. Verfahren zum Empfang eines Mehrträgersignals, **dadurch gekennzeichnet, dass** es einen Dekodierungsschritt des Signals umfasst, wobei das Signal dem Frequenzmultiplexieren mehrerer, jeweils einer Symbolreihe entsprechender, elementarer Trägerfrequenzen entspricht, wobei der Abstand zweier aufeinanderfolgender Symbole eine Symbotdauer τ₀ beträgt,
wobei der Abstand ν₀ zwischen benachbarten Trägerfrequenzen der Hälfte des Umkehrwertes der Symboldauer τ₀ gleicht und,
wobei jedes Trägersignal eine Filterung (94) zur Gestaltung seines Spektrums unterläuft, das eine Bandbreite aufweist, die mehr als das Doppelte des Abstandes zwischen den Trägerfrequenzen ν₀ beträgt und so gewählt wird, das jedes Symbol im Zeitbereich und im Frequenzbereich konzentriert ist.

12. Empfangsverfahren nach Anspruch 11, **dadurch gekennzeichnet, dass** es die folgenden Schritte umfasst:
- Empfang eines Signals, dessen komplexe Umhüllende ein Signal r(t) ist;
- Schätzen (106) der Antwort des Sendekanals, das eine Schätzung der Phasenantwort θ_{m,n} und der Amplitudenantwort ρ_{m,n} umfasst;
- Demodulieren des Signals r(t), das die folgenden Schritte umfasst:
- Multiplizieren (111) des Signals r(t) mit einer Prototypfunktion x(t);
- Zurückfaltung (113) Modulo 2τ₀ der erhaltenen Wellenform;
- Anwendung (114) einer Fourier-Transformierten (FFT);
- Korrektur (115) der vom Sendekanal induzierten Phase θ_{m,n};
- Korrektur (117) der Phase i^{m+n};
- Wahl (118) des reellen Teils *ã*_{*m,n*}*,* das dem erhaltenen Koeffizienten entspricht, gewichtet durch die Amplitudenantwort ρ_{m,n} des Sendekanals.

13. Verfahren nach Anspruch 12, **dadurch gekennzeichnet, dass** es einen Entschachtelungsschritt (108) nach Frequenz und/oder Zeit der reellen numerischen Koeffizienten *ã*_{*m,n*} und eventuell entsprechende Werte ρ_{m,n} der Amplitudenantwort des Kanals umfasst, wobei die Entschachtelung symmetrisch zu einer beim Senden angewändten Veschachtelung ist, und/oder, dass es einen Dekodierungsschritt nach gewichteter Entscheidung umfasst, wobei die Dekodierung der beim Senden angewandten Kanalkodierung angepasst ist.
